# EUROPEAN PATENT APPLICATION

(11) **EP 4 749 950 A1**
(43) Date of publication of application: **27.05.2026**
(21) Application number: 23951805.3
(22) Date of filing: 13.09.2023
(51) Int. Cl.: H04B 7/185

(54) **COMMUNICATION METHOD, DEVICE, STORAGE MEDIUM, AND COMPUTER PROGRAM PRODUCT**

(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); LI, Rong, Shenzhen, Guangdong 518129 (CN); WANG, Jun, Shenzhen, Guangdong 518129 (CN)
(74) Representative: Körber, Martin Hans
(86) International application number: PCT/CN2023/118644
(87) International publication number: WO 2025/054864

(57) **Abstract**

A communication method and apparatus, a storage medium, and a computer program product, are provided, which relate to the field of communication technologies, and are used for improving communication quality. In this application, a terminal apparatus sends first information. The first information includes indication information of at least one spatial region, the indication information of the at least one spatial region is used to determine a first spatial region, and the first spatial region includes an orbital segment of a second satellite apparatus. Alternatively, the first information includes indication information of at least one orbital segment, the indication information of the at least one orbital segment is used to determine a first orbital segment, and the first orbital segment belongs to an orbit of a second satellite apparatus. The terminal apparatus receives second information, where the second information indicates the terminal apparatus to switch from a first satellite apparatus to the second satellite apparatus. Because a network apparatus may determine the switch-to satellite apparatus based on the first information, communication quality of the terminal apparatus can be improved, workload of the network apparatus in selecting the switch-to satellite apparatus can be reduced, and working complexity can be reduced.

## Description

### TECHNICAL FIELD

This application relates to the field of communication technologies, and in particular, to a communication method and apparatus, a storage medium, and a computer program product.

### BACKGROUND

Currently, a 5G new radio (new radio, NR) technology is evolving from R18 to R19. In addition, the NR technology also enters a commercial deployment phase from a standardization phase. The NR standard protocol can be used for wireless communication technologies designed for terrestrial cellular network scenarios, and can provide users with wireless communication services featuring ultra-low latency, ultra-high reliability, ultra-high rates, and ultra-massive connectivity. Compared with terrestrial communication, non-terrestrial network (non-terrestrial network, NTN) communication has features such as a large coverage area and flexible networking, and can achieve seamless global network coverage. NTN communication includes networking using devices such as an uncrewed aerial vehicle, a high-altitude platform, and a satellite, to provide data transmission, voice communication, and other services for user equipment (user equipment, UE).

In some communication scenarios (for example, NR or NTN), data transmission between communication apparatuses is affected, and subsequently, a series of problems are caused. For example, in a satellite mobile communication scenario, during data transmission between a terminal apparatus and a satellite base station, signals are subject to sudden or short-term blockage caused by a building, a tree, a road sign, a street lamp, or the like. The blockage causes a sudden decrease in a signal-to-noise ratio (signal-to-noise ratio, SNR) of a link, and duration of the blockage may reach dozens of milliseconds (milliseconds, ms), resulting in problems such as bit error floor (error floor), fluctuating data transmission rate, and increased (probability of) data retransmissions, and causing relatively low communication quality. Therefore, a solution to improving communication quality is urgently needed.

### SUMMARY

This application provides a communication method and apparatus, a storage medium, and a computer program product to improve communication quality.

According to a first aspect, this application provides a communication method. The method is performed by a terminal apparatus. The terminal apparatus may be a terminal device, or may be a unit, a module, or a chip in the terminal device.

In this method, the terminal apparatus sends first information. The first information includes indication information of at least one spatial region, the indication information of the at least one spatial region is used to determine a first spatial region, and the first spatial region includes an orbital segment of a second satellite apparatus. The terminal apparatus receives second information, where the second information indicates the terminal apparatus to switch from a first satellite apparatus to the second satellite apparatus.

The terminal apparatus may send the first information to a network apparatus, and the second information may also be sent by the network apparatus. The first satellite apparatus may work in transparent mode or regenerative mode. When the first satellite apparatus works in transparent mode, the first information sent by the terminal apparatus may be forwarded by the first satellite apparatus to the network apparatus. When the first satellite apparatus works in regenerative mode, the network apparatus may be the first satellite apparatus.

Because the terminal apparatus may report the first information, and the first information includes the indication information of the at least one spatial region, the network apparatus may determine the first spatial region based on the first information, and then determine, from the first spatial region, a switch-to satellite apparatus (for example, the second satellite apparatus) for the terminal apparatus. In this way, communication quality of the terminal apparatus can be improved. In addition, because the network apparatus may directly search the determined first spatial region for the switch-to satellite apparatus, this solution can reduce workload of the network apparatus in selecting the switch-to satellite apparatus, and therefore reduce working complexity.

In a possible implementation, indication information of a spatial region of the at least one spatial region includes indication information of an elevation range; and an elevation within the elevation range includes an included angle between a line emitted from the terminal apparatus to the sky and a projection of the line on a horizontal plane. The indication information of the elevation range may indicate the elevation range. The elevation range may construct a spatial region. The network apparatus may identify, with reference to a current location of the terminal apparatus and the elevation range, the spatial region indicated by the elevation range.

In a possible implementation, indication information of a spatial region of the at least one spatial region includes indication information of an azimuth range; and an azimuth within the azimuth range includes an included angle between a projection, on the horizontal plane, of a line emitted from the terminal apparatus to the sky, and a projection, on the horizontal plane, of a preset line originating from the terminal apparatus. The indication information of the azimuth range may indicate the azimuth range. The azimuth range may construct a spatial region. The network apparatus may identify, with reference to the current location of the terminal apparatus and the azimuth range, the spatial region indicated by the azimuth range.

In another possible implementation, the elevation range and the elevation range may be used to jointly indicate a spatial region. For example, the spatial region is an intersection between the spatial region constructed by the elevation range and the spatial region constructed by the azimuth range. In this way, the spatial region can be defined in terms of elevation and azimuth separately, thereby reducing a granularity of the spatial region, improving precision of spatial region division, and improving accuracy of the solution. For example, an obstacle exists in a surrounding environment of the terminal apparatus, and a spatial region in which the obstacle is located may be divided into smaller regions based on two angles: an elevation and an azimuth. In this way, the network apparatus can select a switch-to satellite apparatus from a larger spatial region, and the network apparatus can also more accurately identify when quality of communication between the first satellite apparatus and the terminal apparatus degrades.

In a possible implementation, the at least one spatial region may be determined based on surrounding environment information of the terminal apparatus. It can be learned that in this solution, switching between satellite apparatuses does not need to be performed based on a measurement result of a reference signal transmitted between the terminal apparatus and the first satellite apparatus. In this solution, power consumed by the first satellite apparatus for transmitting a reference signal or measuring a reference signal can be reduced. In addition, in this solution, the terminal apparatus may report the first information before the quality of communication with the first satellite apparatus degrades, and then the network apparatus may also indicate, the terminal apparatus to switch to the second satellite apparatus before the quality of communication between the first satellite apparatus and the terminal apparatus degrades, so that duration in which communication quality of the terminal apparatus is relatively poor can be shortened, and that communication interruption caused by relatively poor communication quality can be reduced, thereby improving overall communication quality of the terminal apparatus.

In a possible implementation, the terminal apparatus obtains the surrounding environment information based on data collected by a sensor, where the sensor includes at least one of a camera, a LiDAR, or a ranging apparatus. In this way, this solution does not need assistance of another apparatus, so that resource overheads caused by signaling interaction with the another apparatus can be reduced.

In a possible implementation, the at least one spatial region may alternatively be determined based on quality of a signal transmitted between the terminal apparatus and a satellite apparatus that moves to the at least one spatial region. In this solution, the terminal apparatus does not need to continuously receive reference signals from the first satellite apparatus throughout an overpass of the first satellite apparatus, and the first satellite apparatus does not need to continuously measure reference signals from the terminal apparatus throughout the overpass. In this way, power consumption of the first satellite apparatus can be reduced in this solution. In addition, in this solution, the terminal apparatus may report the first information before the quality of communication with the first satellite apparatus degrades, and then the network apparatus may also indicate the terminal apparatus to switch to the second satellite apparatus before the quality of communication between the first satellite apparatus and the terminal apparatus degrades, so that duration in which communication quality of the terminal apparatus is relatively poor can be shortened, and that communication interruption caused by relatively poor communication quality can be reduced, thereby improving overall communication quality of the terminal apparatus.

In a possible implementation, the at least one spatial region includes the first spatial region and/or a second spatial region; the first spatial region does not include an obstacle, or quality of a signal transmitted between the terminal apparatus and a satellite apparatus that moves to the first spatial region is greater than a first quality threshold; and the second spatial region includes an obstacle, or quality of a signal transmitted between the terminal apparatus and a satellite apparatus that moves to the second spatial region is less than a second quality threshold.

If the terminal apparatus reports indication information of the first spatial region, the network apparatus may identify a spatial region with relatively good communication quality, and then may search the first spatial region for a switch-to satellite apparatus, to indicate the terminal apparatus to switch to the satellite apparatus with better communication quality, thereby improving communication quality.

If the terminal apparatus reports indication information of the second spatial region, the network apparatus may identify a spatial region with relatively poor communication quality, then may identify, with reference to a movement pattern of the first satellite apparatus, when the first satellite apparatus enters the second spatial region, and may further search a spatial region different from the second spatial region for a switch-to satellite apparatus, and then indicate the terminal apparatus to switch to the satellite apparatus in the spatial region different from the second spatial region, thereby improving communication quality. In still another possible implementation, the network apparatus may indicate the terminal apparatus to switch to the second satellite apparatus before the first satellite apparatus enters the second spatial region. In this way, duration in which communication quality of the terminal apparatus is poor can be reduced, thereby improving communication quality of the terminal apparatus.

In a possible implementation, the first information further includes information about a priority associated with a spatial region of the at least one spatial region; and the priority is associated with quality of a signal transmitted between a satellite apparatus running in the spatial region and the terminal apparatus, and/or the priority is associated with presence of an obstacle in the spatial region.

In this way, the network apparatus may determine, based on the priority information, an order of searching regions in which the switch-to satellite apparatus is located, for example, may preferentially search a spatial region with optimal communication quality for the switch-to satellite apparatus. In this solution, the network apparatus can find a satellite apparatus with better communication quality for the terminal apparatus, so that communication quality of the terminal apparatus can be further improved.

In a possible implementation, the terminal apparatus sends updated first information. When the terminal apparatus moves, or a location of an obstacle around the terminal apparatus changes, a range of each spatial region previously identified by the terminal apparatus may also change. For example, a second spatial region including the obstacle may change, and a range of a first spatial region that originally does not include the obstacle may also change. In this way, the terminal apparatus reports the updated first information to indicate a changed range of each spatial region, so that the network apparatus redetermines, based on the updated first information, whether the terminal apparatus needs to switch between satellite apparatuses. For example, when identifying that quality of communication between the terminal apparatus and the second satellite apparatus will soon degrade, the terminal apparatus may be indicated to switch to another satellite apparatus, thereby further improving communication quality.

In a possible implementation, before the terminal apparatus sends the updated first information, the terminal apparatus determines that at least one of the following information is met: A change amount of the location of the terminal apparatus is greater than a first threshold; a change amount of a spatial region in which an obstacle exists around the terminal apparatus is greater than a second threshold; or a change amount of a spatial region in which no obstacle exists around the terminal apparatus is greater than a fifth threshold. In this way, the updated first information is reported only when the change amount of the location of the terminal apparatus or a change amount of the range of each spatial region reaches a specific degree, so that an amount of reported first information can be reduced, and that resource overheads can be reduced.

In a possible implementation, if it is determined that the following content is met, the terminal apparatus determines that the change amount of the spatial region in which the obstacle exists around the terminal apparatus is greater than the second threshold: A variation of an elevation range corresponding to the spatial region in which the obstacle exists around the terminal apparatus is greater than a third threshold; and/or a variation of an azimuth range corresponding to the spatial region in which the obstacle exists around the terminal apparatus is greater than a fourth threshold. This solution provides the terminal apparatus with a specific approach for identifying that the change amount of the surrounding spatial region in which the obstacle exists is greater than the second threshold, and performing identification based on the elevation range and/or the azimuth range. The solution is relatively simple and easy to implement.

In a possible implementation, the terminal apparatus periodically sends the updated first information. In this implementation, overheads caused by resource scheduling by the network apparatus can be reduced.

In a possible implementation, the terminal apparatus may alternatively send the updated first information semi-statically and periodically. The network apparatus may configure resources for the terminal apparatus. After the network apparatus sends activation signaling to the terminal apparatus, the terminal apparatus periodically reports the first information. In this way, a part of resource overheads caused by reporting of the first information can be reduced.

In a possible implementation, the terminal apparatus may send the updated first information after receiving trigger signaling sent by the network apparatus, where the trigger signaling indicates the terminal apparatus to report the updated first information. This implementation is relatively flexible, and resource overheads are relatively low.

**According to a second aspect,** this application provides a communication method. The method is performed by a network apparatus. The network apparatus may be a network device, or may be a unit, a module, or a chip in the network device.

In this method, the network apparatus receives first information. The first information includes indication information of at least one spatial region, the indication information of the at least one spatial region is used to determine a first spatial region, and the first spatial region includes an orbital segment of a second satellite apparatus. The network apparatus sends second information, where the second information indicates a terminal apparatus to switch from a first satellite apparatus to the second satellite apparatus.

Because the terminal apparatus may report the first information, and the first information includes the indication information of the at least one spatial region, the network apparatus may determine the first spatial region based on the first information, and then determine, from the first spatial region, a switch-to satellite apparatus (for example, the second satellite apparatus) for the terminal apparatus. In this way, communication quality of the terminal apparatus can be improved. In addition, because the network apparatus may directly search the determined first spatial region for the switch-to satellite apparatus, this solution can reduce workload of the network apparatus in selecting the switch-to satellite apparatus, and therefore reduce working complexity.

In a possible implementation, for related descriptions of the first information, indication information of a spatial region of the at least one spatial region, the first spatial region, a second spatial region, and the like, refer to the related descriptions in the first aspect. Details are not described again.

In a possible implementation, the network apparatus receives updated first information. For example, the network apparatus may periodically receive the updated first information. The network apparatus may alternatively receive the updated first information semi-statically and periodically. For example, the network apparatus may send activation signaling to the terminal apparatus, where the activation signaling indicates the terminal apparatus to periodically send the updated first information. The network apparatus may alternatively send trigger signaling to the terminal apparatus, where the trigger signaling indicates the terminal apparatus to report the updated first information. For related content, refer to related descriptions in the first aspect and the possible implementations of the first aspect. Details are not described again.

**According to a third aspect,** this application provides a communication method. The method is performed by a terminal apparatus. The terminal apparatus may be a terminal device, or may be a unit, a module, or a chip in the terminal device.

In this method, the terminal apparatus sends first information. The first information includes indication information of at least one orbital segment, the indication information of the at least one orbital segment is used to determine a first orbital segment, and the first orbital segment belongs to an orbit of a second satellite apparatus. The terminal apparatus receives second information, where the second information indicates the terminal apparatus to switch from a first satellite apparatus to the second satellite apparatus.

Because the terminal apparatus may report the first information, and the first information includes the indication information of the at least one orbital segment, the network apparatus may determine the first orbital segment based on the first information, and then determine, from the first orbital segment, a switch-to satellite apparatus (for example, the second satellite apparatus) for the terminal apparatus. In this way, communication quality of the terminal apparatus can be improved. In addition, because the network apparatus may directly search the determined first orbital segment for the switch-to satellite apparatus, this solution can reduce workload of the network apparatus in selecting the switch-to satellite apparatus, and therefore reduce working complexity.

In a possible implementation, the indication information of the at least one orbital segment includes indication information of the first orbital segment. In this solution, the terminal apparatus may report the indication information of the first orbital segment. In this way, the network apparatus may search the first orbital segment for a switch-to satellite apparatus. This solution can reduce workload of the network apparatus in selecting the switch-to satellite apparatus, and therefore reduce working complexity.

In a possible implementation, the indication information of the first orbital segment includes indication information of a first angle range; and an angle within the first angle range includes an included angle between a line connecting a first point located on the orbit of the second satellite apparatus to a center of the orbit of the second satellite apparatus and a line connecting a reference point to the center of the orbit of the second satellite apparatus. The indication information of the first angle range may indicate the first angle range. In this way, the network apparatus may identify the first orbital segment with reference to the first angle range, and then search the first orbital segment for a switch-to satellite apparatus.

In a possible implementation, the first point includes an intersection point between a first spatial region of at least one spatial region and the orbit of the second satellite apparatus. The first spatial region does not include an obstacle, or quality of a signal transmitted between the terminal apparatus and a satellite apparatus that moves to the first spatial region is greater than a second quality threshold.

It can be learned that the terminal apparatus may identify the first spatial region based on an obstacle or signal quality (for example, historical signal quality), and then may use a part or an entirety of an orbital segment in the first spatial region as the first orbital segment. Because quality of the first spatial region is relatively good, quality of communication between the switch-to satellite apparatus found in the first orbital segment and the terminal apparatus is also relatively good.

In a possible implementation, the indication information of the at least one orbital segment includes indication information of a second orbital segment. In this solution, the terminal apparatus may report the indication information of the second orbital segment. In this way, the network apparatus may search an orbital segment different from the second orbital segment for a switch-to satellite apparatus. This solution can reduce workload of the network apparatus in selecting the switch-to satellite apparatus, and therefore reduce working complexity.

In a possible implementation, the second orbital segment belongs to an orbit of the first satellite apparatus. The indication information of the second orbital segment includes indication information of a second angle range. An angle within the second angle range includes an included angle between a line connecting a second point located on the orbit of the first satellite apparatus to a center of the orbit of the first satellite apparatus and a line connecting a reference point to the center of the orbit of the first satellite apparatus. The indication information of the second angle range may indicate the second angle range. In this way, the network apparatus may identify the second orbital segment with reference to the second angle range, and then search an orbital segment different from the second orbital segment for a switch-to satellite apparatus.

In a possible implementation, the second point includes an intersection point between a second spatial region of the at least one spatial region and the orbit of the first satellite apparatus. The second spatial region includes an obstacle, or quality of a signal transmitted between the terminal apparatus and a satellite apparatus that moves to the second spatial region is less than a first quality threshold.

It can be learned that the terminal apparatus may identify the second spatial region based on an obstacle or signal quality (for example, historical signal quality), and then may use a part or an entirety of an orbital segment in the second spatial region as the second orbital segment. Because quality of the second spatial region is relatively poor, quality of communication between the satellite apparatus in the second orbital segment and the terminal apparatus is also relatively poor. The network apparatus may search an orbital segment different from the second orbital segment for a switch-to satellite apparatus, to improve communication quality of the terminal apparatus.

In a possible implementation, the at least one spatial region is determined based on surrounding environment information of the terminal apparatus, and/or the at least one spatial region is determined based on quality of a signal transmitted between the terminal apparatus and a satellite apparatus that moves to the at least one spatial region. The at least one spatial region may include the first spatial region and/or the second spatial region. For related content, refer to related descriptions in the first aspect and the possible implementations of the first aspect. Details are not described again.

In a possible implementation, the terminal apparatus obtains the surrounding environment information based on data collected by a sensor, where the sensor includes at least one of a camera, a LiDAR, or a ranging apparatus. For related content, refer to related descriptions in the first aspect and the possible implementations of the first aspect. Details are not described again.

In a possible implementation, a spatial region of the at least one spatial region includes a spatial region constructed by an elevation range and/or an azimuth range. An elevation within the elevation range includes an included angle between a line emitted from the terminal apparatus to the sky and a projection of the line on a horizontal plane. An azimuth within the azimuth range includes an included angle between a projection, on the horizontal plane, of a line emitted from the terminal apparatus to the sky, and a projection, on the horizontal plane, of a preset line originating from the terminal apparatus. For related content, refer to related descriptions in the first aspect and the possible implementations of the first aspect. Details are not described again.

In a possible implementation, the first information further includes at least one of the following: information about an orbital plane in which an orbital segment of the at least one orbital segment is located; identification information of a satellite apparatus running on an orbital segment of the at least one orbital segment; information about a time range for establishing a communication connection between a satellite apparatus running on an orbital segment of the at least one orbital segment and the terminal apparatus; or a priority associated with an orbital segment of the at least one orbital segment, where the priority is associated with quality of a signal transmitted between a satellite apparatus running on the orbital segment and the terminal apparatus, and/or the priority is associated with presence of an obstacle in a signal transmission path between the satellite apparatus running on the orbital segment and the terminal apparatus.

If the first information includes the information about the orbital plane, the network apparatus may further narrow a search range of the switch-to satellite apparatus, thereby reducing workload of the network apparatus. If the first information includes the identification information of the satellite apparatus, the network apparatus may search satellite apparatuses indicated by identification information of the satellite apparatuses for a switch-to satellite apparatus, so that a search range of the switch-to satellite apparatus can be further narrowed, and that workload of the network apparatus can be reduced. If the first information includes the time range information of the satellite apparatus, the network apparatus may indicate, within a communication time range of each satellite apparatus based on the time range information, the terminal apparatus to establish communication with the satellite apparatus. In this solution, workload of the network apparatus can be further reduced. If the first information includes the information about the priority associated with the orbital segment of the satellite apparatus, the network apparatus may determine, based on the priority information, an order of searching orbital segments in which the switch-to satellite apparatus is located, for example, may preferentially search an orbital segment with optimal communication quality for the switch-to satellite apparatus. In this solution, the network apparatus can find a satellite apparatus with better communication quality for the terminal apparatus, so that communication quality of the terminal apparatus can be further improved.

In a possible implementation, the terminal apparatus sends updated first information. For related content, refer to related descriptions in the first aspect and the possible implementations of the first aspect. Details are not described again.

In a possible implementation, before the terminal apparatus sends the updated first information, the terminal apparatus determines that at least one of the following information is met: A change amount of a location of the terminal apparatus is greater than a first threshold; a change amount of a spatial region in which an obstacle exists around the terminal apparatus is greater than a second threshold; or a change amount of a spatial region in which no obstacle exists around the terminal apparatus is greater than a fifth threshold. For related content, refer to related descriptions in the first aspect and the possible implementations of the first aspect. Details are not described again.

In a possible implementation, the terminal apparatus periodically sends the updated first information. In a possible implementation, the terminal apparatus may alternatively send the updated first information semi-statically and periodically. In a possible implementation, the terminal apparatus may receive trigger signaling, and then send the updated first information. This implementation is relatively flexible, and resource overheads are relatively low. For related content, refer to related descriptions in the first aspect and the possible implementations of the first aspect. Details are not described again.

**According to a fourth aspect,** this application provides a communication method. The method is performed by a network apparatus. The network apparatus may be a network device, or may be a unit, a module, or a chip in the network device.

In this method, the network apparatus receives first information. The first information includes indication information of at least one orbital segment, the indication information of the at least one orbital segment is used to determine a first orbital segment, and the first orbital segment belongs to an orbit of a second satellite apparatus. The network apparatus sends second information, where the second information indicates a terminal apparatus to switch from a first satellite apparatus to the second satellite apparatus.

Because the terminal apparatus may report the first information, and the first information includes the indication information of the at least one orbital segment, the network apparatus may determine the first orbital segment based on the first information, and then determine, from the first orbital segment, a switch-to satellite apparatus (for example, the second satellite apparatus) for the terminal apparatus. In this way, communication quality of the terminal apparatus can be improved. In addition, because the network apparatus may directly search the determined first orbital segment for the switch-to satellite apparatus, this solution can reduce workload of the network apparatus in selecting the switch-to satellite apparatus, and therefore reduce working complexity.

For related descriptions of the first information, the indication information of the at least one orbital segment, indication information of the first orbital segment, indication information of a first angle range, indication information of a second orbital segment, indication information of a second angle range, and the like, refer to related descriptions in the third aspect. Details are not described again. For related descriptions of a first spatial region, a second spatial region, and the like, refer to the related descriptions in the first aspect. Details are not described again.

In a possible implementation, the network apparatus receives updated first information. The network apparatus may periodically receive the updated first information. The network apparatus may alternatively receive the updated first information semi-statically and periodically. For example, the network apparatus may send activation signaling to the terminal apparatus, where the activation signaling indicates the terminal apparatus to periodically send the updated first information. The network apparatus may alternatively send trigger signaling to the terminal apparatus, where the trigger signaling indicates the terminal apparatus to report the updated first information. For related content, refer to related descriptions in the first aspect and the possible implementations of the first aspect. Details are not described again.

According to a fifth aspect, a communication apparatus is provided. The communication apparatus may be the foregoing terminal apparatus or the foregoing network apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fourth aspect, or perform any one of the possible implementations of the first aspect to the fourth aspect.

According to a sixth aspect, a communication apparatus is provided. The communication apparatus may be the foregoing terminal apparatus or the foregoing network apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, one or more processors exist, and one or more memories exist.

Optionally, the memory may be integrated with the processor, or the memory and the processor are separately disposed.

Optionally, the transceiver may include a transmitter machine (transmitter) and a receiver machine (receiver).

According to a seventh aspect, a communication apparatus is provided. The communication apparatus may be the foregoing terminal apparatus or the foregoing network apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal apparatus or the network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a system is provided. The system includes the foregoing terminal apparatus.

In a possible implementation, the system may further include a network apparatus. In another possible implementation, the system may further include a first satellite apparatus and a second satellite apparatus.

According to a ninth aspect, a computer program product is provided. The computer program product includes a computer program (which may also be referred to as code or instructions). When the computer program is run, a computer is enabled to perform any one of the first aspect to the fourth aspect, or perform any one of the possible implementations of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform any one of the first aspect to the fourth aspect, or perform any one of the possible implementations of the first aspect to the fourth aspect.

According to an eleventh aspect, a processing apparatus is provided and includes an interface circuit and a processing circuit. The interface circuit may include an input circuit and an output circuit. The processing circuit is configured to receive a signal through the input circuit, and transmit a signal through the output circuit, so that any one of the first aspect to the fourth aspect or any one of the possible implementations of the first aspect to the fourth aspect is performed.

In a specific implementation process, the processing apparatus may be a chip, the input circuit may be an input pin, the output circuit may be an output pin, and the processing circuit may be a transistor, a gate circuit, a trigger, any type of logic circuit, or the like. An input signal received by the input circuit may be, for example but not limited to, a signal received and input by a receiver. A signal output by the output circuit may be, for example but not limited to, a signal output to a transmitter and transmitted by the transmitter. The input circuit and the output circuit may be a same circuit, and the circuit is used as the input circuit and the output circuit at different moments. Specific implementations of the processor and the various circuits are not limited in this application.

In an implementation, when the processing apparatus is a terminal apparatus or a network apparatus, the interface circuit may be a radio frequency processing chip in the terminal apparatus or the network apparatus, and the processing circuit may be a baseband processing chip in the terminal apparatus or the network apparatus.

In another implementation, the processing apparatus may be some components in the terminal apparatus or the network apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a diagram of an architecture of a communication system to which an embodiment of this application is applied;
FIG. 2 is a diagram of a network architecture of another communication system to which an embodiment of this application is applicable;
FIG. 3 is a schematic flowchart of a possible communication method according to an embodiment of this application;
FIG. 4 is a diagram of a possible elevation range of a second spatial region according to an embodiment of this application;
FIG. 5 is a diagram of a possible azimuth range of a second spatial region according to an embodiment of this application;
FIG. 6 is a diagram of a possible elevation range and azimuth range of a second spatial region according to an embodiment of this application;
FIG. 7 is a diagram of a possible elevation range and azimuth range of a second spatial region according to an embodiment of this application;
FIG. 8 is a diagram of a possible elevation range of a first spatial region according to an embodiment of this application;
FIG. 9 is a diagram of a possible azimuth range of a first spatial region according to an embodiment of this application;
FIG. 10 is a diagram of a possible first orbital segment according to an embodiment of this application;
FIG. 11 is a diagram of a possible first orbital segment according to an embodiment of this application;
FIG. 12 is a diagram of a possible second orbital segment according to an embodiment of this application;
FIG. 13 is a diagram of a possible second orbital segment according to an embodiment of this application;
FIG. 14 is a diagram of a communication apparatus according to an embodiment of this application; and
FIG. 15 is a diagram of another communication apparatus according to an embodiment of this application.

### DESCRIPTION OF EMBODIMENTS

The technical solutions in embodiments of this application may be applied to various communication systems, for example, a terrestrial communication system and a non-terrestrial communication system such as a satellite communication system. The satellite communication system may be integrated with a mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a fifth generation (5th generation, 5G) communication system (for example, a new radio (new radio, NR) system), and a future mobile communication system. The mobile communication system may alternatively be a vehicle to everything (vehicle to everything, V2X) system or an Internet of Things (Internet of Things, IoT) system.

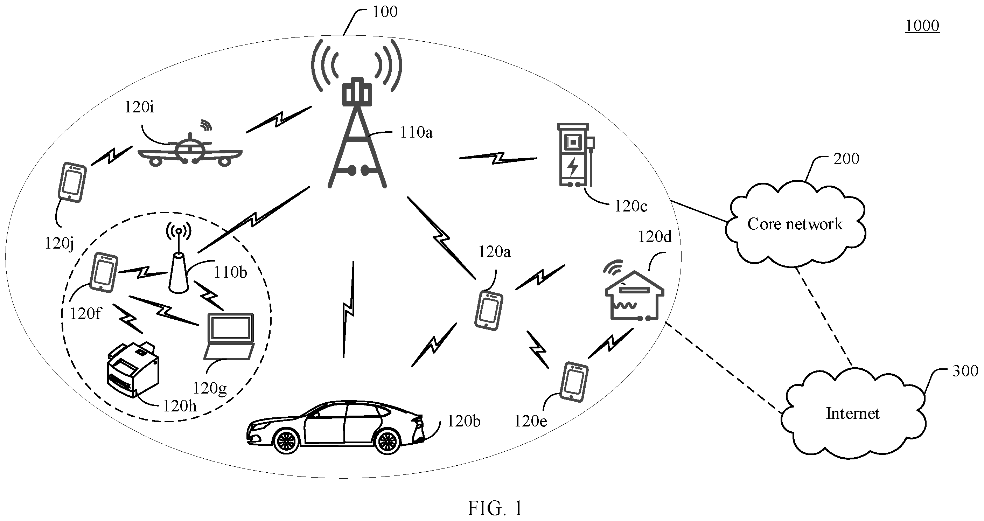

**FIG. 1** is an example of a diagram of a possible architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd Generation Partnership Project (3rd Generation Partnership Project, 3GPP), or may be a Wi-Fi system. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For detailed descriptions of the foregoing protocol layers, refer to related 3GPP technical specifications. The RU may be configured to implement a transceiver function for a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of Things (Internet of Things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by simultaneously using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

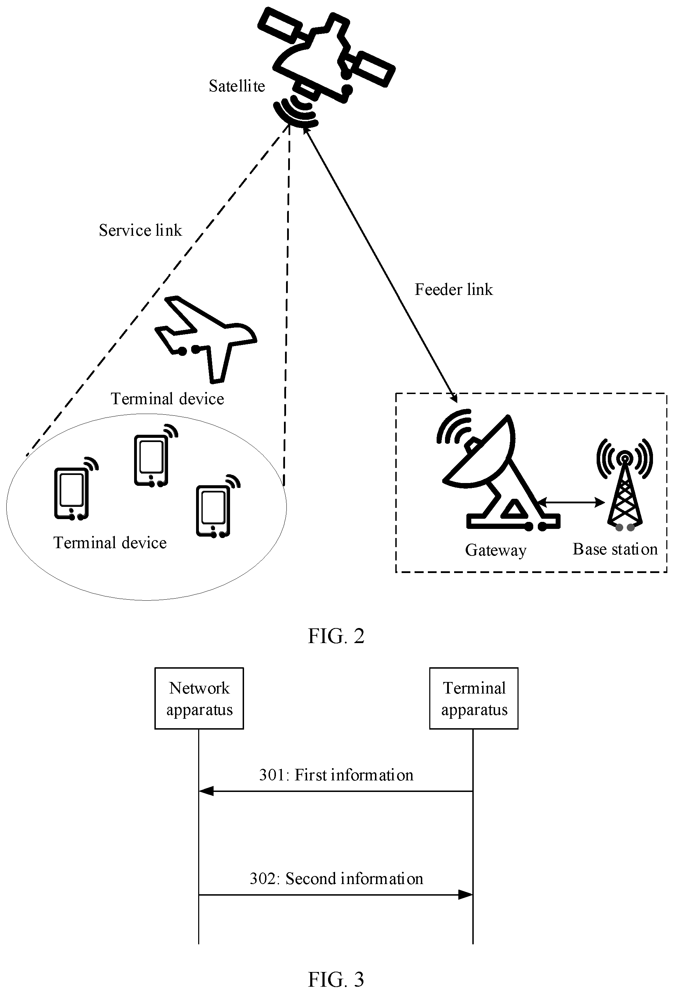

In another example, **FIG. 2** is a diagram of a network architecture of another communication system to which an embodiment of this application is applicable. The communication system includes a satellite, a terminal device, and a gateway. The satellite may be a highly elliptical orbit (highly elliptical orbit, HEO) satellite, a geostationary earth orbit satellite (geosynchronous earth orbit, GEO) satellite, a medium earth orbit (medium earth orbit, MEO) satellite, or a low earth orbit (low earth orbit, LEO) satellite. In addition, an NTN system may further include a high-altitude platform station (high-altitude platform station, HAPS) and the like. This is not limited herein. The gateway (gateway) (or referred to as a ground station, an earth station, a gateway station, or a gateway station) may be configured to connect the satellite and a terrestrial base station gateway station/gateway station (gateway). One or more satellites may be connected to one or more terrestrial base stations through one or more gateways. This is not limited herein. The terminal device includes, for example, a mobile phone or an airplane (which is used as an example in FIG. 2). A link between the satellite and the terminal device is referred to as a service link (service link), and a link between the satellite and the gateway is referred to as a feeder link (feeder link).

An operation mode of the satellite is not limited in embodiments of this application. For example, the operation mode of the satellite may be a transparent (transparent) mode, or may be a regenerative (regenerative) mode.

In transparent mode, the satellite, as an analog radio frequency repeater, has a relay forwarding function, can implement radio frequency conversion and amplification, and can transparently transmit or replicate a signal between the base station and the terminal device. For example, a signal sent by the terminal device may be transparently transmitted via the satellite and forwarded by the gateway to the terrestrial base station. The gateway has a part or all of functions of the base station. In this case, the gateway may be considered as a base station. It may be considered that the gateway and the base station may be deployed together or separately. If the gateway and the base station are separately deployed, a delay of the feeder link includes a delay from the satellite to the gateway and a delay from the gateway to the base station.

In regenerative mode, the satellite, as a base station for wireless communication, has a part or all of functions of the base station, implements regeneration of signals received from the ground, and may understand and process these signals. For example, the satellite may be a base station mounted on an artificial earth satellite or a high-altitude aircraft. For example, the base station may be an evolved NodeB (eNB) or a 5G base station (gNB). The gateway may forward signaling between the satellite (that is, the base station) and a core network.

Based on the embodiments shown in FIG. 1 and FIG. 2 and the foregoing other content, FIG. 3 is an example of a schematic flowchart of a communication method according to an embodiment of this application.

For ease of understanding, FIG. 3 is described from a perspective of interaction between apparatuses. A terminal apparatus in FIG. 3 may be a terminal device or a chip system inside the terminal device. A network apparatus in FIG. 3 may be a network device or a chip system inside the network device. A satellite apparatus (for example, a first satellite apparatus and a second satellite apparatus) in FIG. 3 may be understood as a network apparatus mounted on a satellite, and the network apparatus mounted on the satellite may be a network device or a chip system inside the network device.

As shown in FIG. 3, the method includes the following steps.

**Step 301:** The terminal apparatus sends first information.

Correspondingly, the network apparatus receives the first information.

In this embodiment of this application, the first information may be used by the network apparatus to determine a switch-to satellite apparatus (for example, the second satellite apparatus). After receiving the first information, the network apparatus may determine, based on the first information, the switch-to satellite apparatus (for example, the second satellite apparatus) for the terminal apparatus.

In a possible implementation, the first information may include indication information of at least one spatial region. The spatial region in this embodiment of this application is a region in a three-dimensional coordinate system. For ease of understanding, the region is referred to as a spatial region. In actual application, the spatial region may also be replaced with a noun such as a region. The indication information of the at least one spatial region is used to determine a first spatial region. The network apparatus may determine the first spatial region based on the indication information of the at least one spatial region, and then determine the second satellite apparatus, where the first spatial region includes an orbital segment of the second satellite apparatus. For example, the network apparatus may determine, based on satellite ephemeris information, the second satellite apparatus whose orbit has an intersection with the first spatial region.

The ephemeris information in this embodiment of this application may be a table of precise positions or trajectories of a running celestial body (including an artificial satellite) that change over time, and may be expressed as a function of time. A satellite ephemeris may be used to determine a running status of a flying object, such as time, a position, or a speed. The satellite ephemeris may be further used to determine information about an orbital plane of the satellite, identification information of the satellite, and the like.

In another possible implementation, the first information may include information used to indicate at least one orbital segment. The information used to indicate the at least one orbital segment is used to determine a first orbital segment, and the first orbital segment belongs to the orbit of the second satellite apparatus. In this implementation, the terminal apparatus may obtain satellite ephemeris information in advance, determine information about the at least one orbital segment, and send the information to the network apparatus. The network apparatus determines the first orbital segment based on the received information about the at least one orbital segment.

In a possible implementation, the network apparatus may send, to the terminal apparatus, information used to indicate the terminal apparatus to report the first information. After receiving the information, the terminal apparatus may send the first information. The information used to indicate the terminal apparatus to report the first information may include resource information of the first information, for example, may include at least one of a time domain resource, a frequency domain resource, or a space domain resource used by the terminal apparatus to transmit the first information.

**Step 302:** The network apparatus sends second information.

Correspondingly, the terminal apparatus receives the second information. The second information indicates the terminal apparatus to switch from the first satellite apparatus to the second satellite apparatus.

In this embodiment of this application, the first satellite apparatus may work in transparent mode or regenerative mode. When the first satellite apparatus works in transparent mode, the first information sent by the terminal apparatus may be forwarded by the first satellite apparatus to the network apparatus. The second information sent by the network apparatus in step 302 may also be forwarded by the first satellite apparatus to the terminal apparatus. When the first satellite apparatus works in transparent mode, the network apparatus and the first satellite apparatus may be two apparatuses. When the first satellite apparatus works in regenerative mode, the network apparatus may be the first satellite apparatus, and step 301 may be replaced as follows: The terminal apparatus sends the first information to the first satellite apparatus. Step 302 may be replaced as follows: The first satellite apparatus sends the first information to the terminal apparatus. The first satellite apparatus and the second satellite apparatus in this embodiment of this application may be two different satellite apparatuses.

Because the terminal apparatus may report the first information, and the first information includes the indication information of the at least one spatial region, the network apparatus may determine the first spatial region based on the first information, and then determine, from the first spatial region, a switch-to satellite apparatus (for example, the second satellite apparatus) for the terminal apparatus. In this way, communication quality of the terminal apparatus can be improved. In addition, because the network apparatus may directly search the determined first spatial region for the switch-to satellite apparatus, this solution can reduce workload of the network apparatus in selecting the switch-to satellite apparatus, and therefore reduce working complexity.

To further describe beneficial effects of the solution provided in this embodiment of this application, the following provides a comparative solution. In the comparative solution, a satellite apparatus sends a reference signal to a terminal apparatus, and the terminal apparatus measures the reference signal and feeds back an obtained measurement result to a network apparatus. Alternatively, a terminal apparatus sends a reference signal to a satellite apparatus, and the satellite apparatus measures the reference signal and feeds back an obtained measurement result to the terminal apparatus. For a satellite apparatus in an orbital plane, to measure a channel condition corresponding to each elevation (or referred to as a communication elevation) (for example, whether a signal transmission path that is between the satellite apparatus and the terminal apparatus and that corresponds to the elevation is blocked or whether signal quality is poor), channel measurement needs to be performed throughout an overpass of the satellite apparatus. In addition, to measure whether channels corresponding to different elevations in different orbital planes are blocked (or whether signal quality is poor), channel measurement needs to be further performed during an overpass of a satellite apparatus in each orbital plane.

A satellite apparatus at an orbital altitude of 1200 km is used as an example. An overpass of a satellite in an orbital plane takes approximately 8 minutes (assuming that a minimum communication elevation is 30°). Therefore, a connection time between a satellite apparatus in each orbital plane and the terminal apparatus is 8 minutes. If channel conditions at all communication elevations of the terminal apparatus (for example, the minimum elevation is 30°, with a granularity of 10°) need to be measured, satellites in many (for example, 13) orbital planes need to pass over, and it needs to take 13 * 8 = 104 minutes to obtain blockage angle information of the terminal. As can be learned from the analysis, the solution consumes a relatively long measurement time. In addition, because there are a relatively large quantity of terminal apparatuses, the solution consumes a lot of energy of satellite apparatuses.

In the foregoing solution, the network apparatus indicates the terminal apparatus to perform switching only when the network apparatus determines, based on the signal measurement result, that the terminal apparatus needs to switch between satellite apparatuses. However, sudden blocking (or blockage) between the terminal apparatus and the satellite apparatus causes sudden degradation of communication signal quality, and is likely to cause link communication interruption. Consequently, the number of random access times of the terminal apparatus increases, and system access pressure is increased. In addition, the network apparatus determining switching between satellite apparatuses is triggered only when the terminal apparatus detects signal quality degradation through measurement. Because a delay between the satellite apparatus and the terminal apparatus is relatively long, this solution causes the terminal apparatus to have relatively poor communication quality for a relatively long time.

In view of the foregoing problem, this embodiment of this application provides a possible implementation. In this implementation, the terminal apparatus may report the first information, and the first information may indicate a spatial region (or an orbital segment) with relatively good (and/or relatively poor) quality of communication with the terminal apparatus, so that the network apparatus selects, for the terminal apparatus based on the first information, a switch-to satellite with relatively good communication quality, and indicates, based on the first information, the terminal apparatus to switch between satellite apparatuses.

In a possible implementation, the first information in this embodiment of this application may be determined based on environment information and/or historical signal quality information of the terminal apparatus. In this way, the terminal apparatus does not need to send or detect a reference signal throughout an overpass of a satellite apparatus, so that a quantity of reference signals sent and/or detected by the satellite can be reduced, thereby reducing power consumption of the satellite apparatus.

In still another possible implementation, the terminal apparatus identifies a spatial region or an orbital segment with relatively good (or relatively poor) communication quality based on surrounding environment information or historical signal quality. The network apparatus may identify, with reference to a movement pattern of the first satellite apparatus, that quality of communication between the first satellite apparatus and the terminal apparatus will soon degrade (for example, the first satellite apparatus will soon enter a second spatial region or a second orbital segment), and the network apparatus determines, based on the first information, the second satellite apparatus with relatively good quality of communication with the terminal apparatus, and indicates the terminal apparatus to switch to the second satellite apparatus, so that communication quality of the terminal apparatus can be improved. In this solution, the network apparatus may indicate the terminal apparatus to switch to the second satellite apparatus before the first satellite apparatus enters the orbital segment with relatively poor communication quality, so that duration in which communication quality of the terminal apparatus is relatively poor can be shortened, and that communication interruption caused by the relatively poor communication quality can be reduced, thereby improving overall communication quality of the terminal apparatus.

In this embodiment of this application, information included in the first information may vary. The following separately describes the information in an implementation A and an implementation B. In the implementation A, an example in which the first information may include the indication information of the at least one spatial region is used for description. In the implementation B, an example in which the first information may include the information used to indicate the at least one orbital segment is used for description. The implementation A and the implementation B may alternatively be used in combination. For example, the first information may alternatively include the indication information of the at least one spatial region and the information used to indicate the at least one orbital segment.

**Implementation A:** The first information includes the indication information of the at least one spatial region.

A spatial region with relatively good communication quality and a spatial region with relatively poor communication quality exist in a surrounding environment of the terminal apparatus. The first information may include indication information of one or more spatial regions with relatively good communication quality, and/or indication information of one or more spatial regions with relatively poor communication quality. If the indication information reported by the terminal apparatus is indication information of one or more spatial regions with relatively good communication quality, the network apparatus may search these spatial regions with relatively good communication quality for a switch-to satellite apparatus, so as to indicate the terminal apparatus to switch to the satellite apparatus (for example, the second satellite apparatus). If the indication information reported by the terminal apparatus is indication information of one or more spatial regions with relatively poor communication quality, the network apparatus may search spatial regions different from these spatial regions with relatively poor communication quality for a switch-to satellite apparatus, so as to indicate the terminal apparatus to switch to the satellite apparatus (for example, the second satellite apparatus).

In this embodiment of this application, the at least one spatial region may be determined based on the surrounding environment information of the terminal apparatus, and/or the at least one spatial region may be determined based on quality of a signal transmitted between the terminal apparatus and a satellite apparatus that moves to the at least one spatial region. The following describes, by using an example 1 and an example 2, two solutions in which the terminal apparatus determines the at least one spatial region.

**Example 1:** The at least one spatial region may be determined based on the surrounding environment information of the terminal apparatus.

The terminal apparatus collects data by using a sensor, and obtains the surrounding environment information based on the data collected by the sensor, so that the at least one spatial region can be identified based on the surrounding environment information. The sensor includes at least one of a camera, a LiDAR, a millimeter-wave radar, an ultrasonic radar, or a ranging apparatus. For example, the terminal apparatus may take a picture of the surrounding environment by using a camera, then analyze the picture to identify whether an obstacle exists in the surrounding environment of the terminal apparatus, and then obtain, based on whether an obstacle exists, the at least one spatial region by dividing the spatial region around the terminal apparatus. For another example, the terminal apparatus may perform sensing modeling on the surrounding environment by using a sensing technology, to identify whether an obstacle exists. This solution does not need assistance of another apparatus, so that resource overheads caused by signaling interaction with the another apparatus can be reduced.

For example, the terminal apparatus may divide a spatial region in which an obstacle exists into one or more second spatial regions, and divide a spatial region in which no obstacle exists into one or more first spatial regions. In this embodiment of this application, in a spatial region in which an obstacle exists, a signal transmitted between the terminal apparatus and the satellite apparatus is blocked by the obstacle, and consequently, communication quality may be relatively poor. Therefore, the spatial region in which the obstacle exists may be referred to as a spatial region with relatively poor communication quality. In this embodiment of this application, in a spatial region in which no obstacle exists, a signal transmitted between the terminal apparatus and the satellite apparatus is not blocked by an obstacle, and consequently, communication quality may be relatively good. Therefore, the spatial region in which no obstacle exists may be referred to as a spatial region with relatively good communication quality.

The obstacle in this embodiment of this application may include an object that may affect quality of a signal transmitted between the terminal apparatus and the satellite apparatus. For example, the obstacle may include an object in a signal transmission path between the terminal apparatus and the satellite apparatus, and the obstacle blocks signal transmission between the terminal apparatus and the satellite apparatus to some extent. The obstacle may include, for example, one or more of a building, a tree, or a billboard.

In the solution provided in the example 1, switching between satellite apparatuses does not need to be performed based on a measurement result of a reference signal transmitted between the terminal apparatus and the first satellite apparatus. In this solution, power consumed by the first satellite apparatus for transmitting a reference signal or measuring a reference signal can be reduced. In addition, in this solution, the terminal apparatus may report the first information before the quality of communication with the first satellite apparatus degrades, and then the network apparatus may also indicate the terminal apparatus to switch to the second satellite apparatus before the quality of communication between the first satellite apparatus and the terminal apparatus degrades, so that duration in which communication quality of the terminal apparatus is relatively poor can be shortened, and that communication interruption caused by relatively poor communication quality can be reduced, thereby improving overall communication quality of the terminal apparatus.

**Example 2:** The at least one spatial region may be determined based on quality of a signal transmitted between the terminal apparatus and a satellite apparatus that moves to the at least one spatial region.

The terminal apparatus may determine the at least one spatial region based on historical signal transmission quality. For example, the terminal apparatus may pre-divide a spatial region into several candidate spatial regions. For a candidate spatial region, if signal quality of a historical signal in the candidate spatial region is relatively good, the terminal apparatus may divide the region into one or more first regions. For example, quality of a signal transmitted between the terminal apparatus and the satellite apparatus that moves to the first spatial region is greater than a first quality threshold. For example, a spatial region whose channel quality meets SNR ≥ 0 dB may be divided into one or more first regions. If signal quality of a historical signal in the candidate spatial region is relatively poor, the terminal apparatus may divide the region into one or more second regions. For example, quality of a signal transmitted between the terminal apparatus and the satellite apparatus that moves to the second spatial region is less than a second quality threshold. The second quality threshold and the first quality threshold may be equal or may be unequal. For example, a spatial region whose channel quality meets SNR ≤ 0 dB may be divided into one or more second regions. In this embodiment of this application, "≥" may be understood as greater than or equal to, or understood as not less than. In this embodiment of this application, "≤" may be understood as less than or equal to, or understood as not greater than. In this embodiment of this application, "not greater than" may be replaced with "less than or equal to".

In the solution provided in the example 2, the terminal apparatus does not need to continuously receive a reference signal from the first satellite apparatus throughout an overpass of the first satellite apparatus, and the first satellite apparatus does not need to continuously measure a reference signal from the terminal apparatus throughout the overpass. In this way, power consumption of the first satellite apparatus can be reduced in this solution. In addition, in this solution, the terminal apparatus may report the first information before the quality of communication with the first satellite apparatus degrades, and then the network apparatus may also indicate the terminal apparatus to switch to the second satellite apparatus before the quality of communication between the first satellite apparatus and the terminal apparatus degrades, so that duration in which communication quality of the terminal apparatus is relatively poor can be shortened, and that communication interruption caused by relatively poor communication quality can be reduced, thereby improving overall communication quality of the terminal apparatus.

The foregoing example 1 and example 2 may be separately used, or may be used in combination. For example, the terminal apparatus may divide the at least one spatial region based on the data collected by the sensor and signal quality of a historical signal. For example, when a spatial region includes an obstacle, and signal quality of a historical signal in the spatial region is relatively poor, the terminal apparatus may divide the region into one or more second regions. For another example, when a spatial region does not include an obstacle, and signal quality of a historical signal in the spatial region is relatively good, the terminal apparatus may divide the region into one or more first regions.

In a possible implementation, the first information may include one or more types of information. For example, the first information may include at least one of the following information A1, information A2, information A3, or information A4. The information A1 is indication information of at least one second spatial region. The information A2 is indication information of at least one first spatial region. The information A3 is location information of the terminal apparatus. The information A4 is priority information of the at least one spatial region.

**Information A1:** indication information of the at least one second spatial region.

The second spatial region includes an obstacle; and/or quality of a signal transmitted between the terminal apparatus and the satellite apparatus that moves to the second spatial region is less than the second quality threshold. Quality of a signal transmitted between the terminal apparatus and the satellite apparatus that moves to the first spatial region may alternatively be equal to the second quality threshold. For a manner of dividing the second spatial region by the terminal apparatus, refer to the foregoing example 1 and example 2. Details are not described again.

The first information may include indication information of one or more second spatial regions. The following describes indication information of one second spatial region. Indication information of another second spatial region is similar and is not described. The indication information of the second spatial region may include the following information A1.1 (indication information of an elevation range) and/or information A1.2 (indication information of an azimuth range).

**Information A1.1**: indication information of the elevation range.

The indication information of the second spatial region may include the indication information of the elevation range, the indication information of the elevation range may indicate the elevation range, and a spatial region constructed by the elevation range may include the second spatial region. The network apparatus may determine, with reference to a location (for example, a current location) of the terminal apparatus and the elevation range, the spatial region constructed by the elevation range.

The indication information of the elevation range may include indication information used to indicate the elevation range. The indication information of the elevation range may be elevation value information, or may be an index value associated with the elevation range. A specific form of the indication information of the elevation range is described below by using the following several examples.

**Example 1:** The indication information of the elevation range includes two elevation values. The two elevation values indicate two boundaries of the elevation range. For example, the elevation range is [30°, 50°], and the elevation values included in the indication information of the elevation range are 30° and 50°.

In this embodiment of this application, "°" is a symbol used to represent an angle. In this embodiment of this application, a symbol "[]" indicating an angle range may be replaced with "()". For example, [30°, 50°] may be replaced with (30°, 50°), and 30° and 50° may be considered as boundaries of the elevation range. [30°, 50°] indicates that the elevation range includes 30° and 50°, and (30°, 50°) indicates that the elevation range does not include 30° and 50°.

**Example 2:** The indication information of the azimuth range may include one azimuth value, and a result of calculation between the azimuth value and a preset angle value may be considered as two boundary values of the azimuth range. For example, the elevation value may indicate one boundary of the elevation range. For example, the elevation value is 50°. The elevation value and a preset elevation value (for example, 30°) may jointly determine the elevation range. The preset elevation value may be preconfigured on a network apparatus side, or prescribed in a protocol, or sent by another apparatus to the network apparatus.

**Example 3:** The indication information of the elevation range may include one elevation value. The elevation value may indicate two boundaries of the elevation range. For example, the elevation value is 40°. A range of ±10° (that is, [30°, 50°]) around the elevation value is the elevation range, where 10° is an example, or may be replaced with another preset angle value. The preset angle value may be preconfigured on a network apparatus side, or may be prescribed in a protocol, or may be sent by another apparatus to the network apparatus.

**Example 4:** The indication information of the elevation range may include an index value. There is an association relationship between the index value and the elevation range. The network apparatus may find, based on the index value, the elevation range associated with the index value, and then determine the elevation range.

The elevation in this embodiment of this application may be formed by two lines, for example, may include an included angle between a line passing through the terminal apparatus and a projection of the line on a plane. For example, the elevation may include an included angle between a line emitted from the terminal apparatus to the sky and a projection of the line on a horizontal plane. A value range of the elevation in this embodiment of this application may be [0°, 90°]. For another example, the elevation includes an angle formed by a line of sight and a horizontal line in a vertical plane in which the line of sight is located, where the line of sight is above the horizontal line. For another example, the elevation includes an included angle between the satellite apparatus and a horizon at the location of the terminal apparatus. The elevation may also be used to describe a position of the satellite apparatus passing over the terminal apparatus at a specific time. For example, the elevation 90° may indicate that the satellite apparatus is directly above the terminal apparatus. Because the elevation is related to the location of the terminal apparatus, the elevation observed for the same satellite apparatus by different terminal apparatuses on the ground is different. In addition, the elevation continuously changes with the movement of the satellite apparatus on the orbit of the satellite apparatus.

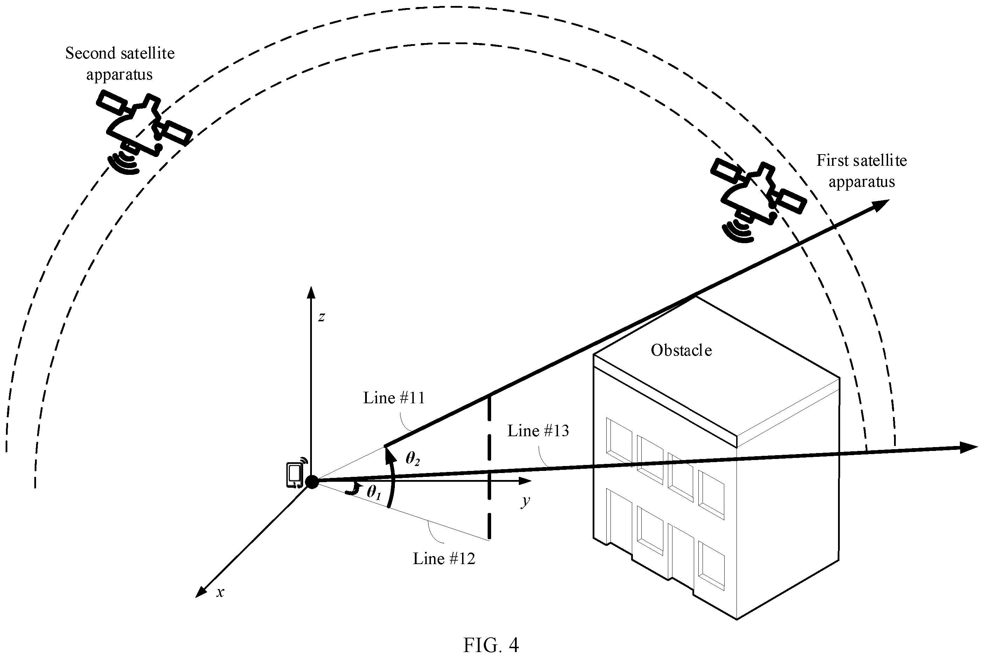

**FIG. 4** is an example of a diagram of a possible elevation range of a second spatial region according to an embodiment of this application. As shown in FIG. 4, the location of the terminal apparatus is an origin of a coordinate system. Three coordinate axes of the coordinate system are respectively represented as an x-axis, a y-axis, and a z-axis, and any two of the three coordinate axes are perpendicular to each other.

A line #11 and a line #13 are respectively lines emitted from the terminal apparatus to the sky. When a plane in which the line #11 and the line #13 are located is perpendicular to the horizontal plane, the line #11 and the line #13 coincide with projections thereof. In FIG. 4, a line #12 is used to represent projections of the line #11 and the line #13 on the horizontal plane. In actual application, the projections of the line #11 and the line #13 on the horizontal plane may not coincide. *θ₁* is an included angle between the line #13 and a projection of the line #13 on the horizontal plane, and *θ₁* is an elevation within an elevation range, or is a boundary of the elevation range. *θ₂* is an included angle between the line #11 and a projection of the line #11 on the horizontal plane, and *θ₂* is an elevation within an elevation range, or is a boundary of the elevation range. FIG. 4 further shows the first satellite apparatus and the second satellite apparatus. The communication system may further include another satellite apparatus, which is not shown in FIG. 4. Orbits of the first satellite apparatus and the second satellite apparatus may be a same orbit, or may be different orbits. In FIG. 4, an example in which the first satellite apparatus and the second satellite apparatus are located on different orbits is used.

For example, the elevation range includes [*θ₁*, *θ₂*], a spatial region constructed by the elevation range may include a spatial region constructed by rotating a region between the line #11 and the line #13 around the z-axis by one revolution, and the second spatial region is a part or an entirety of the spatial region.

In a possible implementation, a boundary used to determine the elevation range of the second spatial region may be determined based on a location of an obstacle. For example, a line corresponding to an elevation used as a boundary within the elevation range may pass through the obstacle or is in contact with a part of the obstacle (for example, may pass through the top of the obstacle). For another example, a line corresponding to an elevation used as a boundary within the elevation range is not in contact with the obstacle. For example, the line passes over the top of the obstacle. In this way, a range of the second spatial region is larger, and a boundary line of the second spatial region is not in contact with a building, so that the obstacle can be better assigned to the second spatial region. In FIG. 4, an example in which the line #11 passes through the top of the obstacle is used for illustration. In actual application, the line #11 may further pass over the top of the obstacle, that is, the line #11 is not in contact with the obstacle. In this way, the range of the second spatial region is larger, and a boundary line (for example, the line #11) of the second spatial region is not in contact with the obstacle, so that the obstacle can be better assigned to the second spatial region.

In this embodiment of this application, another boundary used to determine the elevation range of the second spatial region may be determined based on a location of the obstacle, or may be a preset value. For example, if the obstacle is a billboard placed in the air, the line #13 corresponding to *θ₁* may be a line passing through the bottom of the billboard, or a line passing below the bottom of the billboard, and *θ₁* is calculated based on the line. *θ₁* may be a preset value, for example, may be 0° or 30°. The preset value may be determined based on a communication elevation between the terminal apparatus and the satellite apparatus, for example, may be a minimum communication elevation value. For example, a communication elevation range between the satellite apparatus and the terminal apparatus is, for example, [30°, 90°]. When an included angle (elevation) between a line connecting the satellite apparatus to the terminal apparatus and a projection of the connection line on the horizontal plane is less than 30°, the satellite apparatus is not allowed to communicate with the terminal apparatus.

In this embodiment of this application, for example, lines used to determine an angle (for example, an elevation or an azimuth) are rays. In actual application, the two lines may alternatively be straight lines or line segments.

**Information A1.2:** indication information of the azimuth range.

The indication information of the second spatial region may include the indication information of the azimuth range, the indication information of the azimuth range may indicate the azimuth range, and a spatial region constructed by the azimuth range may include the second spatial region. The network apparatus may determine, with reference to a location (for example, a current location) of the terminal apparatus and the azimuth range, the spatial region constructed by the azimuth range.

The indication information of the azimuth range may include indication information used to indicate the azimuth range. The indication information of the azimuth range may be azimuth value information, or may be an index value associated with the azimuth range. For example, the indication information of the azimuth range may include two boundary values of the azimuth range. For another example, the indication information of the azimuth range may include one azimuth value, and a result of calculation between the azimuth value and a preset angle value may be considered as two boundary values of the azimuth range. For another example, the indication information of the azimuth range may include an index value, and the network apparatus may find, based on the index value, the azimuth range associated with the index value. For a related example, refer to the foregoing example of the elevation. Details are not described again.

An azimuth within the azimuth range in this embodiment of this application may be formed by two lines, for example, may include an included angle between a line passing through the terminal apparatus and a projection of a preset line on a plane. A value range of the azimuth in this embodiment of this application may be [0°, 360°]. For example, an azimuth within the azimuth range may include an included angle between a projection, on the horizontal plane, of a line emitted from the terminal apparatus to the sky, and a projection, on the horizontal plane, of a preset line originating from the terminal apparatus.

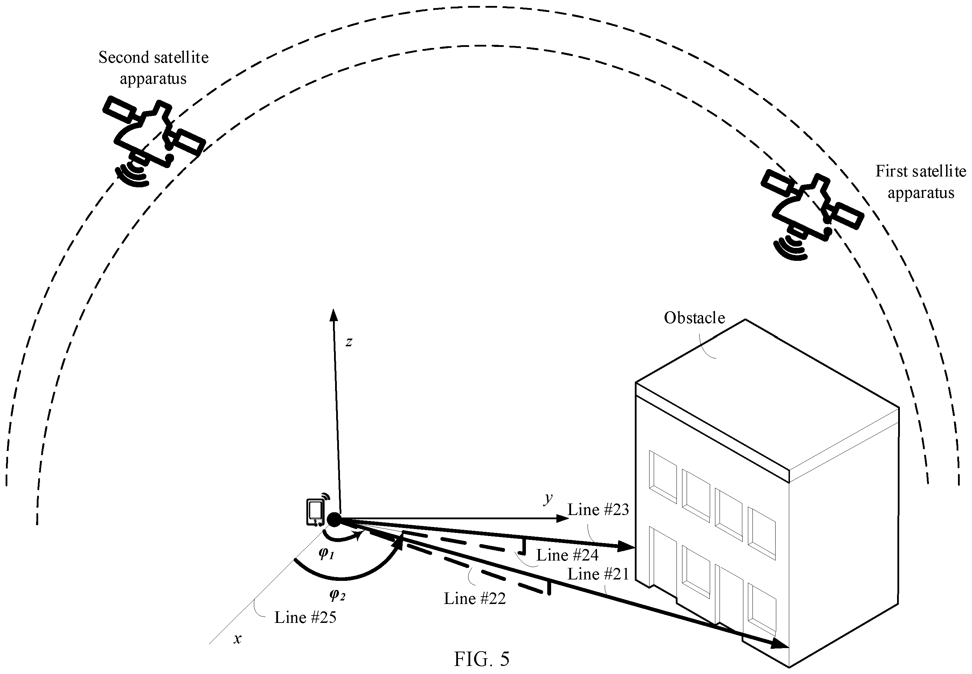

**FIG. 5** is an example of a diagram of a possible azimuth range of a second spatial region according to an embodiment of this application. As shown in FIG. 5, the location of the terminal apparatus is an origin of a coordinate system. In a possible example, the coordinate system may use a direction pointing to the North Pole as an x-axis, and use a direction of a connection line between the center of the Earth and the location of the terminal apparatus as a z-axis.

A line #21 and a line #23 are respectively lines emitted from the terminal apparatus to the sky. A line #22 is a projection of the line #21 on the horizontal plane. A line #25 is a projection of a preset line on the horizontal plane. In FIG. 5, an example in which the line #25 is the x-axis is used for illustration. In actual application, the projection of the preset line on the horizontal plane may not be a coordinate axis. *φ₁* is an included angle between the line #25 and the line #22 on the horizontal plane, or is a boundary of the azimuth range. A line #24 is a projection of the line #23 on the horizontal plane. *φ₂* is an included angle between the line #25 and the line #24 on the horizontal plane, and *φ₂* is an azimuth within the azimuth range, or is a boundary of the azimuth range.

For example, the azimuth range includes [*φ₁, φ₂*]*,* a spatial region constructed by the azimuth range may include a spatial region constructed by extending a region between the line #24 and the line #22 in a direction perpendicular to the horizontal plane, and the second spatial region is a part or an entirety of the spatial region.

In a possible implementation, two boundaries used to determine the azimuth range of the second spatial region may be determined based on a location of an obstacle. For example, a line corresponding to an azimuth used as a boundary within the azimuth range may pass through the obstacle or is in contact with a part of the obstacle (for example, may pass through the left side or the right side of the obstacle). For another example, a line corresponding to an azimuth used as a boundary within the azimuth range is not in contact with the obstacle. For example, the line passes to the left of the left side (or to the right of the right side) of the obstacle. In this way, a range of the second spatial region is larger, and a boundary line of the second spatial region is not in contact with a building, so that the obstacle can be better assigned to the second spatial region. In FIG. 5, an example in which the line #23 passes through the left side of the obstacle and the line #21 passes through the right side of the obstacle is used for illustration. In actual application, the line #23 and the line #21 may further pass through a farther region outside the obstacle, that is, the line #23 and the line #21 are not in contact with the obstacle. In this way, the range of the second spatial region is larger, and a boundary line (for example, the line #21) of the second spatial region is not in contact with the obstacle, so that the obstacle can be better assigned to the second spatial region. For other content in FIG. 5, refer to related descriptions in FIG. 4. Details are not described again.

In a possible implementation, there is an intersection between the spatial region constructed by the azimuth range and the spatial region constructed by the elevation range, and the second spatial region may be a part or an entirety of a spatial region in the intersection. Alternatively, it may be understood that the elevation range and the elevation range are used to jointly indicate a spatial region. For example, the spatial region is an intersection between the spatial region constructed by the elevation range and the spatial region constructed by the azimuth. In this way, the spatial region can be defined in terms of elevation and azimuth separately, thereby reducing a granularity of the spatial region, improving precision of spatial region division, and improving accuracy of the solution. For example, an obstacle exists in the surrounding environment of the terminal apparatus, and a spatial region in which the obstacle is located may be divided into smaller regions based on two angles: an elevation and an azimuth. In this way, the network apparatus can select a switch-to satellite apparatus from a larger spatial region, and the network apparatus can also more accurately identify when quality of communication between the first satellite apparatus and the terminal apparatus degrades.

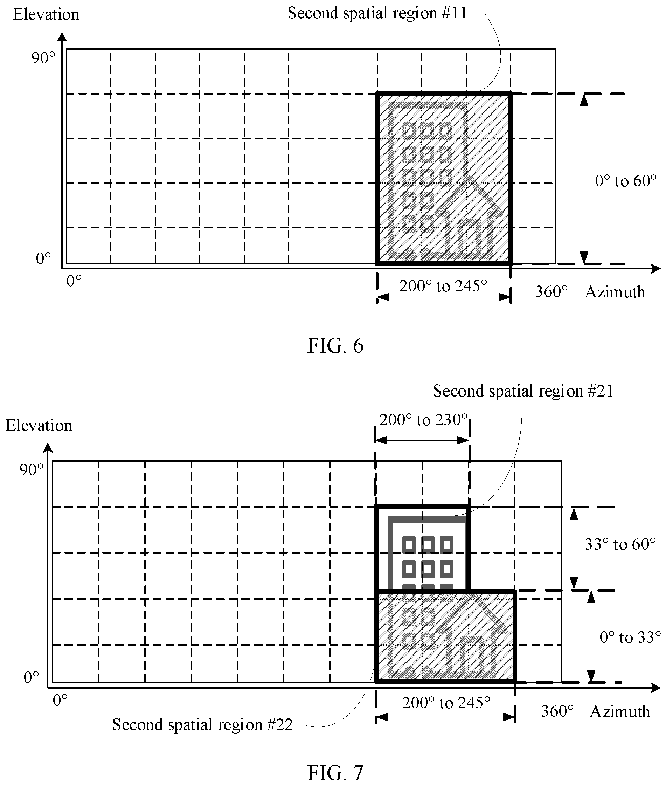

FIG. 6 and FIG. 7 are examples of diagrams of several possible elevation ranges and azimuth ranges of second spatial regions according to an embodiment of this application. Refer to FIG. 6. A horizontal axis represents an azimuth, and a vertical axis represents an elevation. An obstacle in the figure may be assigned to a second spatial region #11. In FIG. 6, a range of the second spatial region #11 is larger than that of the obstacle itself, so that a boundary line of the second spatial region #11 is not in contact with the obstacle, and that some margins are reserved between the two. As shown in FIG. 6, an azimuth range corresponding to the second spatial region #11 is 200° to 245°, and an elevation range of the second spatial region #11 is 0° to 60°. It can be learned from FIG. 6 that a spatial region constructed by the elevation range of 0° to 60° and the azimuth range of 200° to 245° is the second spatial region #11.

In FIG. 6, the obstacle is assigned to one second spatial region, that is, the second spatial region #11. Unlike FIG. 6, in FIG. 7, a spatial region in which an obstacle is located is divided into a plurality of second spatial regions, for example, a second spatial region #21 and a second spatial region #22 shown in FIG. 7. An azimuth range corresponding to the second spatial region #21 is 200° to 230°, and an elevation range of the second spatial region #21 is 33° to 60°. An azimuth range corresponding to the second spatial region #22 is 200° to 245°, and an elevation range of the second spatial region #22 is 0° to 33°.

In this embodiment of this application, the first information may include the indication information of the elevation range and/or the indication information of the azimuth range of the at least one spatial region (for example, at least one second spatial region). Table 1 below shows an example of an elevation range and an azimuth range that are reported by the terminal apparatus and that indicate a second spatial region. As shown in the second column in Table 1, the second spatial region #21 is a spatial region constructed by the azimuth range of [200°, 230°] and the elevation range of [33°, 60°]. Content of other columns is similar and is not described. In the example of the angle range in this embodiment of this application, [200°, 230°] may be replaced with 200° to 230°, or may be replaced with (200°, 230°). Other examples are similar and are not described. Angle range values in Table 1 are several examples. In this embodiment of this application, azimuth ranges of two second spatial regions may be the same or different, and elevation ranges thereof may be the same or different.

**Table 1 Example of an azimuth range and an elevation range of a second spatial region**

| | Second spatial region #21 | Second spatial region #22 | Second spatial region #23 | Second spatial region #24 | Second spatial region #25 |
|---|---|---|---|---|---|
| Azimuth range | [200°, 230°] | [200°, 245°] | [60°, 80°] | [60°, 110°] | [10°, 20°] |
| Elevation range | [33°, 60°] | [0°, 33°] | [30°, 50°] | [30°, 50°] | [30°, 40°] |

When the first information includes the indication information of the at least one second spatial region, the network apparatus may identify, based on the first information, a spatial region (that is, the second spatial region) in which a signal of the terminal apparatus is blocked, and then may consider other regions as spatial regions (that is, first spatial regions) in which a signal of the terminal apparatus is not blocked, search the spatial regions (that is, first spatial regions) in which no blockage exists, for an appropriate satellite apparatus (for example, the second satellite apparatus), and use this satellite apparatus as a switch-to satellite apparatus. The network apparatus may alternatively indicate the terminal apparatus to switch from the first satellite apparatus to the second satellite apparatus before the first satellite apparatus enters the spatial region (that is, the second spatial region) in which blockage exists, to avoid impact of signal blockage.

For example, to avoid communication interruption caused by blockage of a signal of the satellite apparatus by a building or a tree around the terminal apparatus, the network apparatus determines, by using the first information reported by the terminal apparatus, a spatial region (that is, the second spatial region) in which blockage exists, and before the first satellite apparatus moves to the spatial region (that is, the second spatial region) in which blockage exists, indicates the terminal apparatus to switch to another satellite that is not blocked, for example, the second satellite apparatus, so that the second satellite apparatus continues to provide a communication service for the terminal apparatus. Therefore, communication signal blockage can be mitigated, communication quality can be improved, and communication interruption can be avoided.

If the terminal apparatus reports the indication information of the second spatial region, the network apparatus may identify a spatial region with relatively poor communication quality, then may identify, with reference to the movement pattern of the first satellite apparatus, when the first satellite apparatus enters the second spatial region, and may further search a spatial region different from the second spatial region for a switch-to satellite apparatus, and then indicate the terminal apparatus to switch to the satellite apparatus in the spatial region different from the second spatial region, thereby improving communication quality. In still another possible implementation, the network apparatus may indicate the terminal apparatus to switch to the second satellite apparatus before the first satellite apparatus enters the second spatial region. In this way, duration in which communication quality of the terminal apparatus is poor can be reduced, thereby improving communication quality of the terminal apparatus.

**Information A2:** indication information of the at least one first spatial region.

The first spatial region does not include an obstacle; and/or quality of a signal transmitted between the terminal apparatus and the satellite apparatus that moves to the first spatial region is greater than the first quality threshold. The first quality threshold and the second quality threshold may be equal or may be unequal. Quality of a signal transmitted between the terminal apparatus and the satellite apparatus that moves to the first spatial region may alternatively be equal to the first quality threshold. For a manner of dividing the first spatial region by the terminal apparatus, refer to the foregoing content. Details are not described again.

The first information may include indication information of one or more first spatial regions. The following describes indication information of one first spatial region. Indication information of another first spatial region is similar and is not described. The indication information of the first spatial region may include the following information A2.1 (indication information of an elevation range) and/or information A2.2 (indication information of an azimuth range).

**Information A2.1**: indication information of the elevation range.

The indication information of the first spatial region may include the indication information of the elevation range, the indication information of the elevation range may indicate the elevation range, and a spatial region constructed by the elevation range may include the first spatial region. The indication information of the elevation range may include indication information used to indicate the elevation range. The indication information of the elevation range may be elevation value information, or may be an index value associated with the elevation range. For example, the indication information of the elevation range may include two boundary values of the elevation range. For another example, the indication information of the elevation range may include one elevation value, and a result of calculation between the elevation value and a preset angle value may be considered as two boundary values of the elevation range. For another example, the indication information of the elevation range may include an index value, and the network apparatus may find, based on the index value, the elevation range associated with the index value. Related content of the elevation range, the elevation, the indication information of the elevation range, and the like is similar to related descriptions in the foregoing information A1.1, and details are not described again.

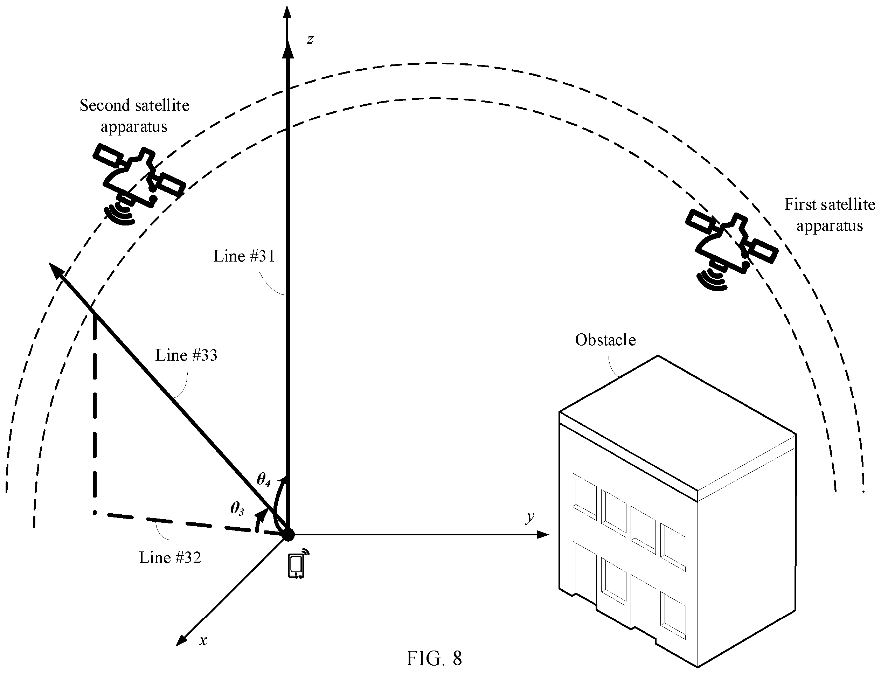

**FIG.** 8 is an example of a diagram of a possible elevation range of a first spatial region according to an embodiment of this application. As shown in FIG. 8, the location of the terminal apparatus is an origin of a coordinate system. A line #31 and a line #33 are respectively lines emitted from the terminal apparatus to the sky. A line #32 is a projection of the line #33 on the horizontal plane. In the example in FIG. 8, the line #31 is a line that coincides with a z-axis, and a projection of the line #31 on the horizontal plane is the origin of the coordinate system. *θ₃* is an included angle between the line #33 and the projection (that is, the line #32) of the line #33 on the horizontal plane. *θ₄* is an included angle between the line #31 and the horizontal plane.

For example, the elevation range includes [*θ₃, θ₄*]*,* a spatial region constructed by the elevation range may include a spatial region constructed by rotating a region between the line #31 and the line #33 around the z-axis by one revolution, and the first spatial region is a part or an entirety of the spatial region. The first spatial region does not include an obstacle. After identifying an obstacle, the terminal apparatus may select a region that does not include the obstacle as the first spatial region. For other content in FIG. 8, refer to related descriptions in FIG. 4. Details are not described again.

**Information A2.2:** indication information of the azimuth range.

The indication information of the first spatial region may include the indication information of the azimuth range, the indication information of the azimuth range may indicate the azimuth range, and a spatial region constructed by the azimuth range may include the first spatial region. The indication information of the azimuth range may include indication information used to indicate the azimuth range. The indication information of the azimuth range may be azimuth value information, or may be an index value associated with the azimuth range. For example, the indication information of the azimuth range may include two boundary values of the azimuth range. For another example, the indication information of the azimuth range may include one azimuth value, and a result of calculation between the azimuth value and a preset angle value may be considered as two boundary values of the azimuth range. For another example, the indication information of the azimuth range may include an index value, and the network apparatus may find, based on the index value, the azimuth range associated with the index value. Related content of the azimuth range, the azimuth, the indication information of the azimuth range, and the like is similar to related descriptions in the foregoing information A1.2, and details are not described again.

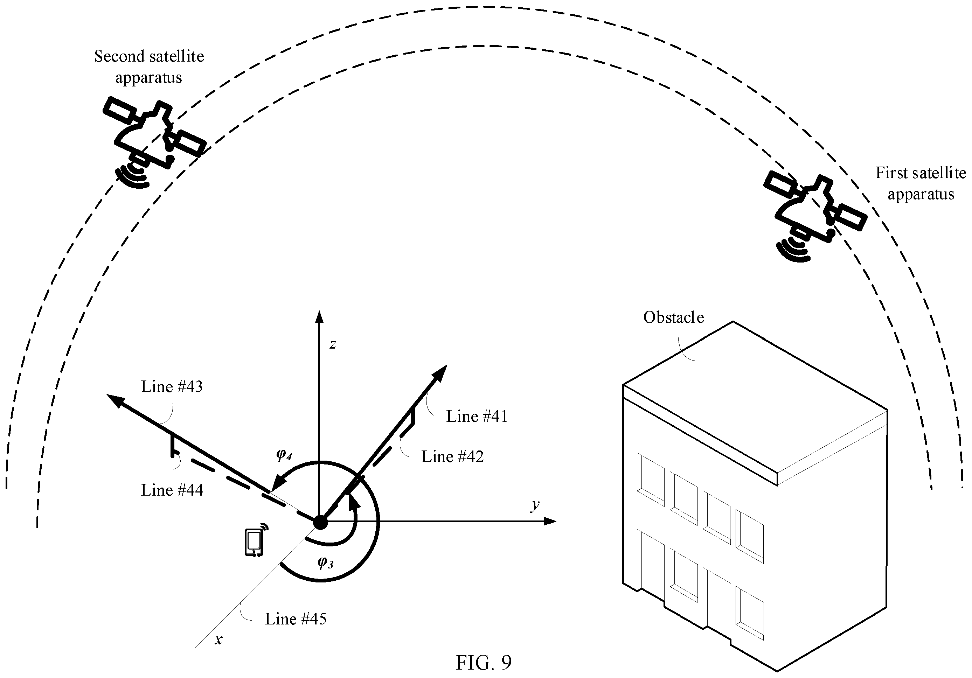

**FIG. 9** is an example of a diagram of a possible azimuth range of a first spatial region according to an embodiment of this application. As shown in FIG. 9, the location of the terminal apparatus is an origin of a coordinate system. A line #41 and a line #43 are respectively lines emitted from the terminal apparatus to the sky. A line #42 is a projection of the line #41 on the horizontal plane. A line #45 is a projection of a preset line on the horizontal plane. In FIG. 9, an example in which the line #45 is an x-axis is used for illustration. In actual application, the projection of the preset line on the horizontal plane may not be a coordinate axis. *φ₃* is an included angle between the line #45 and a projection of the line #42 on the horizontal plane, and *φ₃* is an azimuth within the azimuth range, or is a boundary of the azimuth range. A line #44 is a projection of the line #43 on the horizontal plane. *φ₄* is an included angle between the line #45 and a projection of the line #44 on the horizontal plane, and *φ₄* is an azimuth within the azimuth range, or is a boundary of the azimuth range. In the example of the azimuth in the figure, the included angle is determined based on a counterclockwise direction. Alternatively, the included angle may be determined based on a clockwise direction. For example, *φ₃* may alternatively be represented in a direction from the line #42 to the line #45.

For example, the azimuth range includes [*φ₃*, *φ₄*], a spatial region constructed by the azimuth range may include a spatial region constructed by extending a region between the line #44 and the line #42 in a direction perpendicular to the horizontal plane, and the first spatial region is a part or an entirety of the spatial region. The first spatial region does not include an obstacle. After identifying an obstacle, the terminal apparatus may select a region that does not include the obstacle as the first spatial region. For other content in FIG. 9, refer to related descriptions in FIG. 4. Details are not described again.

In a possible implementation, there is an intersection between the spatial region constructed by the azimuth range and the spatial region constructed by the elevation range, and the first spatial region may be a part or an entirety of a spatial region in the intersection.

If the terminal apparatus reports the indication information of the first spatial region, the network apparatus may identify a spatial region with relatively good communication quality, and then may search the first spatial region for a switch-to satellite apparatus, to indicate the terminal apparatus to switch to the satellite apparatus with better communication quality, thereby improving communication quality.

**Information A3:** location information of the terminal apparatus.

Both the azimuth range and the elevation range determined by the terminal apparatus are calculated based on the current location of the terminal apparatus. Therefore, the network apparatus may determine, with reference to the location information of the terminal apparatus and the azimuth range and/or the elevation range, the spatial region (for example, the second spatial region and/or the first spatial region) divided by the terminal apparatus.

**Information A4:** information about a priority associated with a spatial region of the at least one spatial region.

A priority of a spatial region is associated with quality of a signal transmitted between a satellite apparatus running in the spatial region and the terminal apparatus. For another example, a priority of a spatial region is associated with presence of an obstacle in the spatial region (for example, whether an obstacle exists). A priority of a spatial region may include, for example, a priority level, for example, a high priority, a medium priority, or a low priority.

The terminal apparatus may obtain a priority determining criterion or threshold of the spatial region as prescribed in a protocol or by receiving the priority determining criterion or threshold from another apparatus (for example, the network apparatus).

For example, a priority of a spatial region whose channel quality meets SNR ≥ 7 dB may be a high priority. A priority of a spatial region whose channel quality meets 7 > SNR ≥ 3 dB may be a medium priority. A priority of a spatial region whose channel quality meets 3 > SNR ≥ 0 dB may be a low priority.

For another example, a spatial region that does not include an obstacle (or in which a signal of the terminal apparatus is not blocked) has a high-priority. A spatial region that includes a plant-type obstacle such as a tree (or in which a signal of the terminal apparatus is blocked by a plant such as a tree) has a medium-priority. A spatial region that includes a building-type obstacle (or in which a signal of the terminal apparatus is blocked by a building) has a low-priority.

Table 2 below shows an example of information that is reported by the terminal apparatus and that indicates an elevation range, an azimuth range, and a priority of a first spatial region. As shown in the second column of Table 2, a first spatial region #31 is a spatial region constructed by an azimuth range of [240°, 280°] and an elevation range of [60°, 90°], and information about a priority of the first spatial region #31 is a high priority. Content in other columns is similar and is not described. In this embodiment of this application, azimuth ranges of two first spatial regions may be the same or different, and elevation ranges thereof may be the same or different.

**Table 2 Example of information about an elevation range, an azimuth range, and a priority of a first spatial region**

| | First spatial region #31 | First spatial region #32 | First spatial region #33 | First spatial region #34 | First spatial region #35 |
|---|---|---|---|---|---|
| Azimuth range | [240°, 280°] | [80°, 110°] | [30°, 200°] | [200°, 360°] | [0°, 30°] |
| Elevation range | [60°, 90°] | [50, 90°] | [30°, 90°] | [50°, 90°] | [30°, 90°] |
| Priority information | High priority | Medium priority | Medium priority | Medium priority | Low priority |

When the first information reported by the terminal apparatus includes priority information of the one or more first spatial regions, the network apparatus may select, based on the priority information, a region in which a switch-to satellite apparatus is located. The priority information may also indicate an order of spatial regions that should be considered for selection by the network apparatus and to which the switch-to satellite apparatus belongs. For example, the network apparatus may preferentially select a satellite apparatus in a first spatial region with a high priority as the switch-to satellite apparatus. If the switch-to satellite apparatus is not found in the spatial region with the high priority, the network apparatus may search a first spatial region with a medium priority for the switch-to satellite apparatus. If the switch-to satellite apparatus is still not found, the network apparatus may search a first spatial region with a low priority for the switch-to satellite apparatus. In this solution, the network apparatus can find a satellite apparatus with better communication quality for the terminal apparatus, so that communication quality of the terminal apparatus can be further improved.

For example, the first information reported by the terminal apparatus indicates, to the terminal apparatus, a spatial region with a high priority, for example, indicates that the priority of the first spatial region is higher. The network apparatus side may indicate, to the terminal apparatus by using the first information reported by the terminal apparatus, a satellite apparatus in the spatial region with the higher priority, for example, the second satellite apparatus, so that the terminal apparatus accesses the second satellite apparatus. Because the first satellite apparatus will soon enter the second spatial region, but the second satellite apparatus still requires a relatively long time to enter the second spatial region and can provide a communication service for the terminal for a longer time, the terminal apparatus accesses the second satellite apparatus in advance. This can mitigate communication signal blockage and improve communication quality.

**Implementation B**: The first information includes indication information of the at least one orbital segment.

The indication information of the at least one orbital segment is used to determine the first orbital segment. Because the terminal apparatus may report the first information, and the first information includes the indication information of the at least one orbital segment, the network apparatus may determine the first orbital segment based on the first information, and then determine, from the first orbital segment, a switch-to satellite apparatus (for example, the second satellite apparatus) for the terminal apparatus. In this way, communication quality of the terminal apparatus can be improved. In addition, because the network apparatus may directly search the determined first orbital segment for the switch-to satellite apparatus, this solution can reduce workload of the network apparatus in selecting the switch-to satellite apparatus, and therefore reduce working complexity.

The second orbital segment in this embodiment of this application may be understood as an orbital segment in which the terminal apparatus is not expected to communicate with the satellite apparatus on the orbital segment. For example, the second orbital segment is an orbital segment in a spatial region (for example, the second spatial region) in which a signal of the terminal apparatus is blocked or signal quality of the terminal apparatus is relatively poor. For example, a second orbital segment may be a part of the orbit of the first satellite apparatus. The network apparatus may set, based on indication information of the second orbital segment, a satellite apparatus (for example, the second satellite apparatus) running on an orbital segment different from the second orbital segment as a switch-to satellite apparatus for the terminal apparatus.

The indication information of the at least one orbital segment may include the following information B1 and/or information B2. The first information may further include at least one of the following information B3, information B4, information B5, or information B6.

**Information B1:** indication information of the first orbital segment.

The indication information of the at least one orbital segment may include indication information of at least one first orbital segment. In this solution, the terminal apparatus may report the indication information of the first orbital segment. In this way, the network apparatus may search the first orbital segment for a switch-to satellite apparatus. This solution can reduce workload of the network apparatus in selecting the switch-to satellite apparatus, and therefore reduce working complexity.

In this embodiment of this application, one first orbital segment is used as an example for description. Related solutions of other first orbital segments are similar and are not described.

The first orbital segment in this embodiment of this application may be understood as an orbital segment in which the terminal apparatus is expected to communicate with the satellite apparatus on the orbital segment. For example, the first orbital segment is an orbital segment in a spatial region (for example, the first spatial region) in which a signal of the terminal apparatus is not blocked or less blocked or signal quality of the terminal apparatus is relatively good. The network apparatus may search, based on the indication information of the at least one first orbital segment, satellite apparatuses running on the at least one first orbital segment, for a satellite apparatus (for example, the second satellite apparatus) to which the terminal apparatus is to switch. For example, a first orbital segment may be a part of the orbit of the second satellite apparatus.

The indication information of the first orbital segment may indicate the first orbital segment. For example, the indication information of the first orbital segment includes indication information of a first angle range. The indication information of the first angle range may indicate the first angle range, and a spatial region constructed by the first angle range may include the first orbital segment. The network apparatus may determine the first orbital segment based on the spatial region constructed by the first angle range.

The indication information of the first angle range may include indication information used to indicate the first angle range. The indication information of the first angle range may be angle value information, or may be an index value associated with the first angle range. For example, the indication information of the first angle range may include two boundary values of the first angle range. For another example, the indication information of the first angle range may include one angle value, and a result of calculation between the angle value and a preset angle value may be considered as two boundary values of the first angle range. For another example, the indication information of the first angle range may include an index value, and the network apparatus may find, based on the index value, the first angle range associated with the index value. For a related example, refer to the foregoing example. Details are not described again.

In this embodiment of this application, an angle within the angle range used to describe the orbital segment may include: an included angle between a line connecting a point located on the orbit of the satellite apparatus to a center of the orbit of the second satellite apparatus and a line connecting a reference point located on the orbit of the satellite apparatus to the center of the orbit of the second satellite apparatus. In this embodiment of this application, a value range of the angle used to indicate the orbital segment may be [0°, 360°]. For example, an angle within the first angle range includes an included angle between a line connecting a first point located on the orbit of the second satellite apparatus to the center of the orbit of the second satellite apparatus and a line connecting the reference point to the center of the orbit of the second satellite apparatus, and the reference point is also located on the orbit of the second satellite apparatus. In this embodiment of this application, reference points on orbits of different satellite apparatuses may be different. The reference point in this embodiment of this application may include an intersection point between an ascending orbit and the orbital plane of the satellite apparatus, or include an intersection point between an ascending orbit and an ecliptic plane. The ecliptic plane (ecliptic plane) may refer to an orbital plane in which the Earth revolves around the Sun. The ascending orbit may refer to a satellite movement direction from the South Pole to the North Pole of the Earth, and the opposite direction may be referred to as a descending orbit.

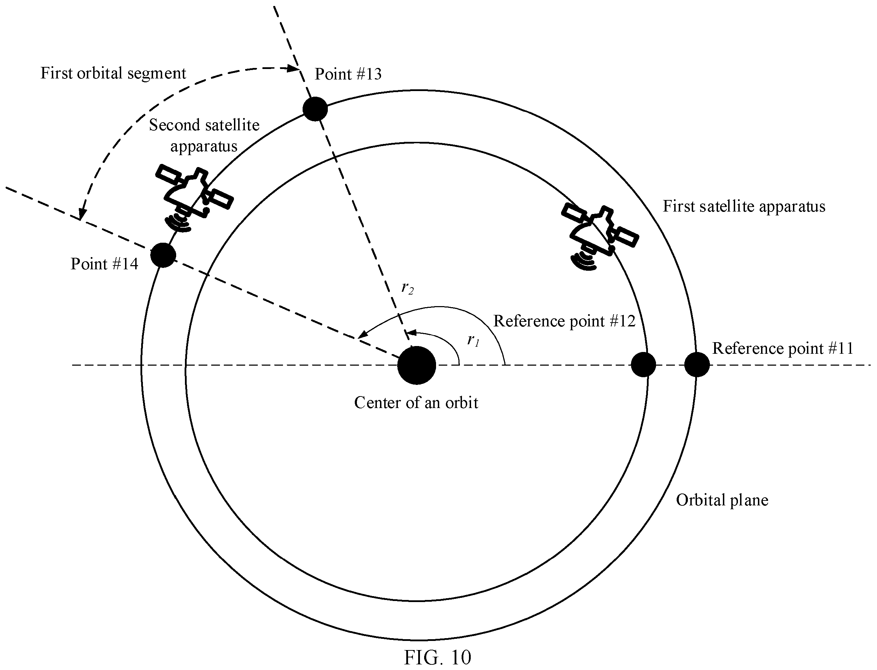

**FIG. 10** is an example of a diagram of a possible first orbital segment according to an embodiment of this application. Refer to FIG. 10. FIG. 10 shows orbital planes of the first satellite apparatus and the second satellite apparatus. In FIG. 10, an example in which centers of the two orbits are a same point is used. In actual application, centers of orbits of different satellite apparatuses may be different. FIG. 10 shows an example of a reference point #12 on the orbit of the first satellite apparatus and a reference point #11 on the orbit of the second satellite apparatus.

As shown in FIG. 10, an included angle between a line connecting the reference point #11 to the center of the orbit of the second satellite apparatus and a line connecting a point #13 to the center of the orbit of the second satellite apparatus is *r₁*. An included angle between a line connecting the reference point #11 to the center of the orbit of the second satellite apparatus and a line connecting a point #14 to the center of the orbit of the second satellite apparatus is *r₂*. The first angle range may include [*r₁*, *r₂*]*,* and an intersection between the spatial region constructed by the first angle range and the orbit of the second satellite apparatus may be the first orbital segment.

In a possible implementation, the orbital segment indicated by the first information may be determined based on a spatial region determined by the terminal apparatus. For example, the first orbital segment may indicate the first angle range. The first angle range is an included angle between a line connecting the first point of the second satellite apparatus to the center of the orbit of the second satellite apparatus and a line connecting a reference point to the center of the orbit of the second satellite apparatus. The first point may include an intersection point between the first spatial region and the orbit of the second satellite apparatus. For related descriptions of the first spatial region, refer to the foregoing content. Details are not described again. It can be learned that the terminal apparatus may identify the first spatial region based on an obstacle or signal quality (for example, historical signal quality), and then may use a part or an entirety of an orbital segment in the first spatial region as the first orbital segment. Because quality of the first spatial region is relatively good, quality of communication between the switch-to satellite apparatus found in the first orbital segment and the terminal apparatus is also relatively good.

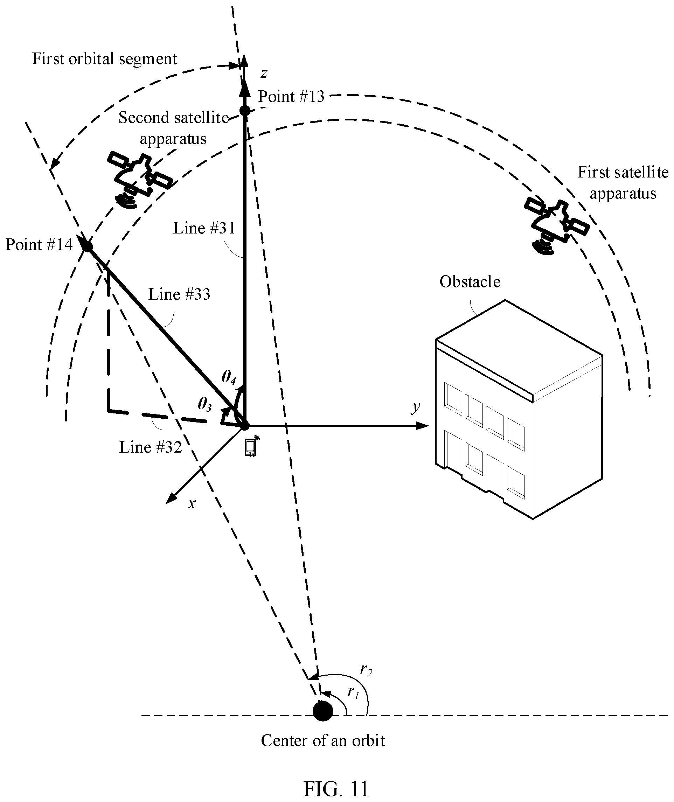

**FIG. 11** is an example of a diagram of a possible first orbital segment according to an embodiment of this application. FIG. 11 may be considered as a diagram of a combination of FIG. 10 and FIG. 8. As shown in FIG. 11, a point #13 may be considered as an intersection point between the first spatial region and the orbit of the second satellite apparatus, and a point #14 may be considered as another intersection point between the first spatial region and the orbit of the second satellite apparatus.

After obtaining the information about the first spatial region, the terminal apparatus may determine, with reference to satellite ephemeris information, an orbital segment of the satellite apparatus in the first spatial region, and then send the orbital segment to the network apparatus, so that the network apparatus uses a satellite apparatus that moves to the orbital segment as a switch-to satellite apparatus for the terminal apparatus. The satellite ephemeris information in this embodiment of this application may include information such as orbit information of the satellite apparatus and a location of the satellite apparatus at a specific time.

**Information B2:** indication information of the second orbital segment.

The indication information of the at least one orbital segment may include indication information of at least one second orbital segment. In this solution, the terminal apparatus may report the indication information of the second orbital segment. In this way, the network apparatus may search an orbital segment different from the second orbital segment for a switch-to satellite apparatus. This solution can reduce workload of the network apparatus in selecting the switch-to satellite apparatus, and therefore reduce working complexity.

In this embodiment of this application, one second orbital segment is used as an example for description. Related solutions of other second orbital segments are similar and are not described.

The second orbital segment in this embodiment of this application may be understood as an orbital segment in which the terminal apparatus is not expected to communicate with the satellite apparatus on the orbital segment. For example, the second orbital segment is an orbital segment in a spatial region (for example, the second spatial region) in which a signal of the terminal apparatus is blocked or signal quality of the terminal apparatus is relatively poor. The network apparatus may search, based on the indication information of the at least one second orbital segment, satellite apparatuses running on an orbital segment different from the second orbital segment, for a satellite apparatus (for example, the second satellite apparatus) to which the terminal apparatus is to switch. For example, a second orbital segment may be a part of the orbit of the first satellite apparatus.

The indication information of the second orbital segment may indicate the second orbital segment. For example, the indication information of the second orbital segment includes indication information of a second angle range. A spatial region constructed by the second angle range may include the second orbital segment. For a related example of the indication information of the second angle range, refer to the foregoing example of the indication information of the first angle range. Details are not described again. In this embodiment of this application, for a definition of an angle within an angle range used to describe an orbital segment, refer to the foregoing descriptions. Details are not described again.

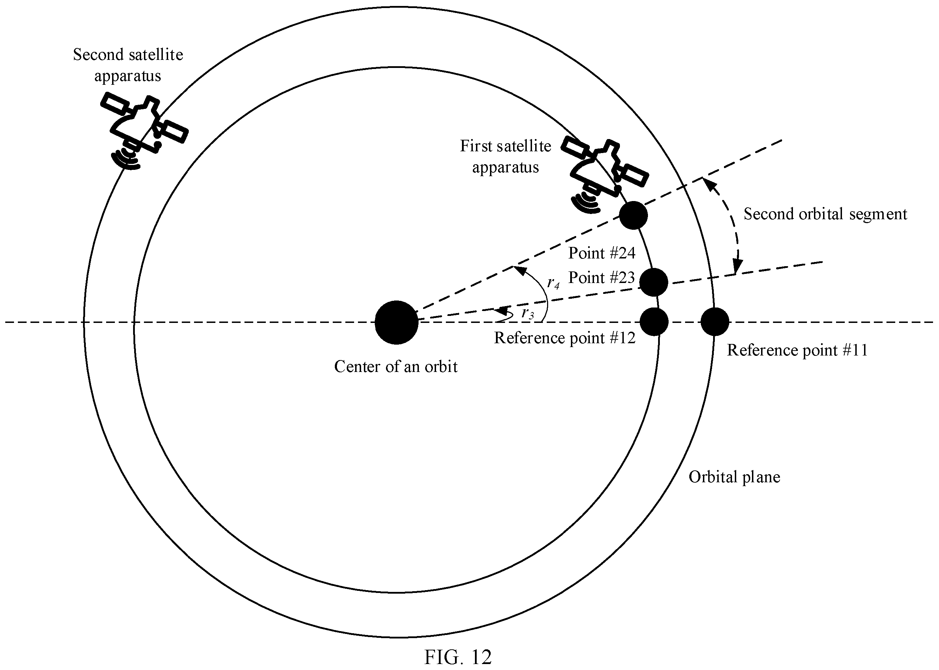

**FIG. 12** is an example of a diagram of a possible second orbital segment according to an embodiment of this application. As shown in FIG. 12, an included angle between a line connecting a reference point #12 to a center of the orbit of the first satellite apparatus and a line connecting a point #23 to the center of the orbit of the first satellite apparatus is *r₃*. An included angle between a line connecting the reference point #12 to the center of the orbit of the first satellite apparatus and a line connecting a point #24 to the center of the orbit of the first satellite apparatus is *r₄.* The second angle range may include [*r₃*, *r₄*], and an intersection between the spatial region constructed by the second angle range and the orbit of the first satellite apparatus may be the second orbital segment.

In a possible implementation, the orbital segment indicated by the first information may be determined based on a spatial region determined by the terminal apparatus. For example, the second orbital segment may indicate the second angle range. The second angle range is an included angle between a line connecting a second point of the first satellite apparatus to the center of the orbit of the first satellite apparatus and a line connecting a reference point to the center of the orbit of the first satellite apparatus. The second point may include an intersection point between the second spatial region and the orbit of the first satellite apparatus. For related descriptions of the second spatial region, refer to the foregoing content. Details are not described again. It can be learned that the terminal apparatus may identify the second spatial region based on an obstacle or signal quality (for example, historical signal quality), and then may use a part or an entirety of an orbital segment in the second spatial region as the second orbital segment. Because quality of the second spatial region is relatively poor, quality of communication between the satellite apparatus in the second orbital segment and the terminal apparatus is also relatively poor. The network apparatus may search an orbital segment different from the second orbital segment for a switch-to satellite apparatus, to improve communication quality of the terminal apparatus.

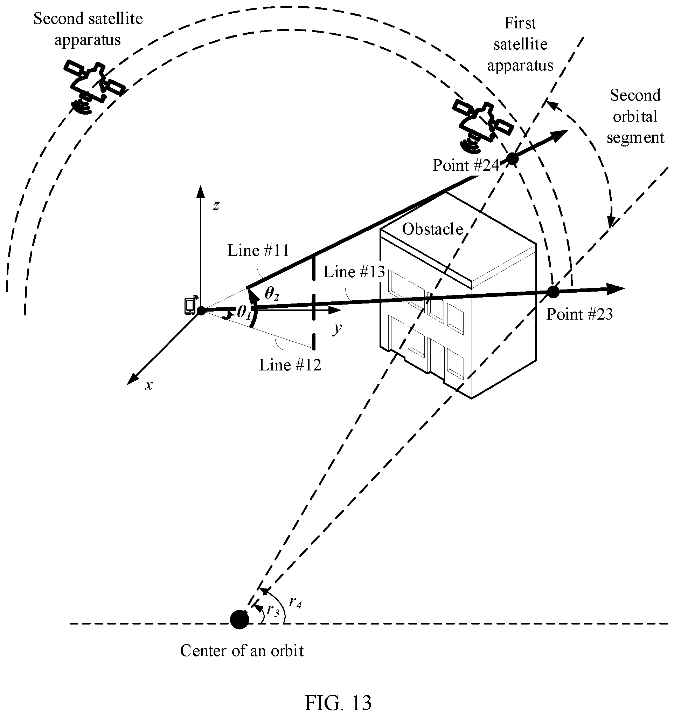

**FIG. 13** is an example of a diagram of a possible second orbital segment according to an embodiment of this application. FIG. 13 may be considered as a diagram of a combination of FIG. 12 and FIG. 6. As shown in FIG. 13, a point #23 may be considered as an intersection point between the second spatial region and the orbit of the first satellite apparatus, and a point #24 may be considered as another intersection point between the second spatial region and the orbit of the first satellite apparatus.

After obtaining the information about the second spatial region, the terminal apparatus may determine, with reference to satellite ephemeris information, an orbital segment of the satellite apparatus in the second spatial region, and then send the orbital segment to the network apparatus, so that the network apparatus uses a satellite apparatus in an orbital segment other than the orbital segment as a switch-to satellite apparatus for the terminal apparatus.

**Information B3:** information about an orbital plane in which an orbital segment of the at least one orbital segment is located.

The information about the orbital plane may include information used to indicate the orbital plane, for example, information such as an identifier of the orbital plane and an index of the orbital plane.

The information about the orbital plane may include information about an orbital plane of the first orbital segment, so that the network apparatus searches for a satellite apparatus moving to the first orbital segment of the orbital plane and uses this satellite apparatus as a switch-to satellite apparatus for the terminal apparatus. The information about the orbital plane may alternatively include information about an orbital plane of the second orbital segment, so that the network apparatus searches for a satellite apparatus moving to an orbital segment different from the second orbital segment of the orbital plane and uses this satellite apparatus as a switch-to satellite apparatus for the terminal apparatus. In this solution, the network apparatus can further narrow a search range of a switch-to satellite apparatus, thereby reducing workload of the network apparatus.

**Information B4:** information about a priority associated with an orbital segment of the at least one orbital segment.

For example, a priority of an orbital segment is associated with quality of a signal transmitted between a satellite apparatus running on the orbital segment and the terminal apparatus. For another example, a priority of an orbital segment is associated with presence of an obstacle (for example, whether an obstacle exists) on a signal transmission path between a satellite apparatus running on the orbital segment and the terminal apparatus. A priority of an orbital segment may include, for example, a priority level, for example, a high priority, a medium priority, or a low priority.

The terminal apparatus may obtain a priority determining criterion or threshold of the orbital segment as prescribed in a protocol or by receiving the priority determining criterion or threshold from another apparatus (for example, the network apparatus). For example, a priority of an orbital segment whose channel quality meets SNR ≥ 7 dB may be a high priority. A priority of an orbital segment whose channel quality meets 7 > SNR ≥ 3 dB may be a medium priority. A priority of an orbital segment whose channel quality meets 3 > SNR ≥ 0 dB may be a low priority.

For another example, an orbital segment in which a signal transmission path does not include an obstacle (or a signal of the terminal apparatus is not blocked) has a high-priority. An orbital segment in which a signal transmission path includes a plant-type obstacle such as a tree (or a signal of the terminal apparatus is blocked by a plant such as a tree) has a medium-priority. An orbital segment in which a signal transmission path includes a building-type obstacle (or a signal of the terminal apparatus is blocked by a building) has a low-priority.

In a possible implementation, the terminal apparatus may determine the priority of the orbital segment based on the priority of the spatial region. For example, the priorities of the orbital segment and the spatial region may be equal. For example, if a spatial region has a high priority, an orbital segment determined based on an intersection between the spatial region and the orbit of the satellite apparatus may also have a high priority. For the priority of the spatial region, refer to the foregoing description. Details are not described again.

Table 3 below shows an example of information that is reported by the terminal apparatus and that indicates an angle range and a priority of an orbital segment. An orbital segment shown in the second row and the second column in Table 3 is an intersection between a spatial region constructed by the angle range indicated by [angle #1, angle #2] and an orbital plane #1, and information about a priority of the orbital segment is a high priority. Other content is similar and is not described.

**Table 3 Example of information used to indicate an angle range and a priority of an orbital segment**

| | Orbital segment | | |
|---|---|---|---|
| Orbital plane #1 | [Angle #1, angle #2] | [Angle #3, angle #4] | [Angle #5, angle #6] |
| Orbital plane #2 | [Angle #7, angle #8] | [Angle #9, angle #10] | [Angle #11, angle #12] |
| Priority information | High priority | Medium priority | Low priority |

When the first information reported by the terminal apparatus includes priority information of one or more orbital segments, the network apparatus may select a switch-to satellite apparatus based on the priority information. The priority information may also indicate an order of orbital segments that should be considered for selection by the network apparatus and to which the switch-to satellite apparatus belongs. For example, the network apparatus may preferentially select a satellite apparatus in an orbital segment with a high priority as the switch-to satellite apparatus. If the switch-to satellite apparatus is not found in the orbital segment with the high priority, the network apparatus may search an orbital segment with a medium priority for the switch-to satellite apparatus. If the switch-to satellite apparatus is still not found, the network apparatus may search an orbital segment with a low priority for the switch-to satellite apparatus. In this solution, the network apparatus can find a satellite apparatus with better communication quality for the terminal apparatus, so that communication quality of the terminal apparatus can be further improved.

**Information** B5: identification information of a satellite apparatus running on an orbital segment of the at least one orbital segment.

The identification information of the satellite apparatus may include information used to indicate the satellite apparatus, for example, information such as an identifier of the satellite apparatus and an index of the satellite apparatus.

The identification information of the satellite apparatus may include identification information of the satellite apparatus in the first orbital segment, so that the network apparatus uses the satellite apparatus as a switch-to satellite apparatus for the terminal apparatus. The identification information of the satellite apparatus may alternatively include identification information of the satellite apparatus in the second orbital segment, so that the network apparatus uses a satellite apparatus different from the satellite apparatus as a switch-to satellite apparatus for the terminal apparatus.

In this solution, the network apparatus may search satellite apparatuses indicated by identification information of the satellite apparatuses for a switch-to satellite apparatus, so that a search range of the switch-to satellite apparatus can be further narrowed, and that workload of the network apparatus can be reduced.

**Information B6:** information about a time range for establishing a communication connection between a satellite apparatus running on an orbital segment of the at least one orbital segment and the terminal apparatus.

The network apparatus may select, within a corresponding time range, a satellite apparatus corresponding to the time range as a satellite apparatus communicating with the terminal apparatus. In this solution, the network apparatus may indicate, within a communication time range of each satellite apparatus based on the time range information, the terminal apparatus to establish communication with the satellite apparatus. In this solution, workload of the network apparatus can be further reduced.

Table 4 below shows an example of information about a time range for establishing a communication connection between a satellite apparatus and the terminal apparatus. [Time #1, time #2] shown in the second row and the second column in Table 4 is a time range for establishing a communication connection between the second satellite apparatus and the terminal apparatus. Other content is similar and is not described. As shown in Table 5, the network apparatus may indicate the terminal apparatus to switch to the second satellite apparatus before the time #1, so that the terminal apparatus communicates with the second satellite apparatus within [time #1, time #2]. The network apparatus may indicate the terminal apparatus to switch to a third satellite apparatus before a time #3, so that the terminal apparatus communicates with the third satellite apparatus within [time #3, time #4].

**Table 4 Example of information about a time range for establishing a communication connection between a satellite apparatus and the terminal apparatus**

| | Time range |
|---|---|
| Second satellite apparatus | [Time #1, time #2] |
| Third satellite apparatus | [Time #3, time #4] |

In the information B6, the first information may report information about the at least one orbital segment, and the network apparatus may select a switch-to satellite apparatus based on the information about the orbital segment. This solution can reduce workload of the network apparatus side in determining an orbital segment of a satellite, thereby reducing workload of the network apparatus and reducing complexity of executing the solution on the network side.

The implementation A and the implementation B may be separately performed, or may be used in combination. For example, the first information may include at least one of parameters used in the two implementations. For example, the first information includes at least one of the indication information of the at least one second spatial region, the indication information of the at least one first spatial region, or the indication information of the at least one orbital segment.

After step 302, the terminal apparatus sends updated first information. For example, when the terminal apparatus moves, or a location of an obstacle around the terminal apparatus changes, a range of each spatial region previously identified by the terminal apparatus may also change. For example, a second spatial region including the obstacle may change, and a range of a first spatial region that originally does not include the obstacle may also change. In this way, the terminal apparatus reports the updated first information to indicate a changed range of each spatial region, so that the network apparatus redetermines, based on the updated first information, whether the terminal apparatus needs to switch between satellite apparatuses. For example, when identifying that quality of communication between the terminal apparatus and the second satellite apparatus will soon degrade, the terminal apparatus may be indicated to switch to another satellite apparatus, thereby further improving communication quality.

In still another possible implementation, the terminal apparatus may further send, to the network apparatus, information used to request to obtain a resource (for example, at least one of a time domain resource, a frequency domain resource, or a space domain resource) of the updated first information.

By using an implementation C1, an implementation C2, and an implementation C3, the following describes several possible implementations in which the terminal apparatus sends the updated first information.

**Implementation C1**: The terminal apparatus sends the updated first information when determining that at least one of the following content C1.1, content C1.2, or content C1.3 is met.

**Content C1.1:** The location of the terminal apparatus changes. For example, a change amount of the location of the terminal apparatus is greater than a first threshold. The first threshold may be a length value, for example, 10 meters or 20 meters.

**Content C1.2:** A spatial region in which an obstacle exists around the terminal apparatus changes.

For example, if a change amount of the spatial region in which the obstacle exists around the terminal apparatus is greater than a second threshold, it may be determined that the spatial region in which the obstacle exists around the terminal apparatus changes.

If it is determined that at least one of the following information is met, the terminal apparatus determines that the change amount of the spatial region in which the obstacle exists around the terminal apparatus is greater than the second threshold: A variation of an elevation range corresponding to the spatial region in which the obstacle exists around the terminal apparatus is greater than a third threshold; and/or a variation of an azimuth range corresponding to the spatial region in which the obstacle exists around the terminal apparatus is greater than a fourth threshold. The third threshold and the fourth threshold may be angle values, for example, may be 3° or 10°. This solution provides the terminal apparatus with a specific approach for identifying that the change amount of the surrounding spatial region in which the obstacle exists is greater than the second threshold, and performing identification based on the elevation range and/or the azimuth range. The solution is relatively simple and easy to implement.

**Content C1.3:** A change amount of a spatial region in which no obstacle exists around the terminal apparatus is greater than a fifth threshold.

For example, when determining that the following condition is met, the terminal apparatus determines that the content C1.3 is met:

A variation of the elevation range of the first spatial region identified by the terminal apparatus is greater than a sixth threshold (a preset angle value). For another example, a variation of the azimuth range of the first spatial region identified by the terminal apparatus is greater than a seventh threshold (a preset angle value). The sixth threshold and the seventh threshold may be equal or unequal. For related content, refer to the description of the content C1.2, and details are not described again.

In the implementation C1, the updated first information is reported only when the change amount of the location of the terminal apparatus or a change amount of the range of each spatial region reaches a specific degree, so that an amount of reported first information can be reduced, and that resource overheads can be reduced.

The threshold (for example, the first threshold, the second threshold, the third threshold, the fourth threshold, the fifth threshold, the sixth threshold, or the seventh threshold) in this embodiment of this application may be configured by the network apparatus, or may be prescribed in a protocol.

**Implementation C2:** The network apparatus may send trigger signaling (a medium access control control element (medium access control control element, MAC CE) or downlink control information (downlink control information, DCI)) to the terminal apparatus, where the trigger signaling is used to trigger the terminal apparatus to report the information of the updated first information. The terminal apparatus reports the updated first information after receiving the trigger signaling. This implementation is relatively flexible, and resource overheads are relatively low.

**Implementation C3:** The terminal apparatus may periodically send the first information.

Period duration may be prescribed in a protocol or configured by the network apparatus. After reporting one piece of first information, the terminal apparatus may start a timer, where duration of the timer is the period duration. After the duration indicated by the timer expires, the terminal apparatus sends the updated first information. In this implementation, overheads caused by resource scheduling by the network apparatus can be reduced.

**Implementation C4:** The terminal apparatus semi-statically reports the first information.

The network apparatus may configure resources for the terminal apparatus. After the network apparatus sends activation signaling (for example, MAC CE signaling) to the terminal apparatus, the terminal apparatus periodically reports the first information. In this way, a part of resource overheads caused by reporting of the first information can be reduced.

For signaling sent by the network apparatus to the terminal apparatus, for example, the trigger signaling, the activation signaling, or signaling used to configure a parameter, for example, signaling used to configure period duration, signaling used to configure each threshold (for example, the first threshold, the second threshold, the third threshold, or the fourth threshold), or signaling used to configure a resource of the first information, the signaling may be included in at least one type of broadcast information, such as a system information block (system information block, SIB) 1, other system information (other system information, OSI), or a master information block (master information block, MIB). The signaling may be sent by the network apparatus to the terminal apparatus in a broadcast or multicast manner. Sending the foregoing signaling by the network apparatus to the terminal apparatus in the broadcast or multicast manner can avoid scheduling different resources for different terminal apparatuses to send the foregoing signaling. In this way, signaling overheads for resource scheduling are reduced, and system scheduling complexity is reduced.

In still another possible implementation, if the signaling sent by the network apparatus to the terminal apparatus is sent in a radio resource control (radio resource control, RRC) connection establishment stage and a subsequent communication process, the network apparatus may carry the signaling in at least one of RRC signaling (for example, an RRC setup (RRC setup) message, RRC reconfiguration signaling (RRC reconfiguration), or RRC resume signaling (RRC resume)), downlink control information (downlink control information, DCI), group DCI, or a media access control (media access control, MAC) control element (control element, CE), or indicate the foregoing signaling or parameter values to the terminal apparatus by using a table, or send the signaling or parameter values to the terminal apparatus in a unicast or multicast manner along with data transmission or in a separately allocated physical downlink shared channel (physical downlink shared channel, PDSCH) bearer. An advantage of sending the foregoing signaling to the terminal apparatus separately or in a multicast manner is that parameter values for each terminal apparatus or each group of terminal apparatuses can be flexibly controlled. For example, the network apparatus configures different parameters for blockage information reporting, such as periodic reporting, semi-static reporting, or aperiodic reporting, for the terminal apparatus based on different probabilities of changes in the blockage environment in different locations or different regions of the terminal apparatus, to optimize reporting resource occupation and optimize UE communication performance or system communication spectral efficiency. For example, the network apparatus may determine, based on different geographical locations of the terminal apparatus, that the probabilities of changes in the blockage environment are different, and accordingly, a frequency for updating the blockage information also varies. Different terminal apparatuses or different groups of terminal apparatuses may be configured with different frequencies for updating the blockage information, so as to optimize resource usage for updating the blockage information by each terminal apparatus or each group of terminal apparatuses, avoid an unnecessary spectral efficiency loss and excessively high energy consumption, and improve overall communication performance of the terminal apparatus and the system.

It may be understood that, to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

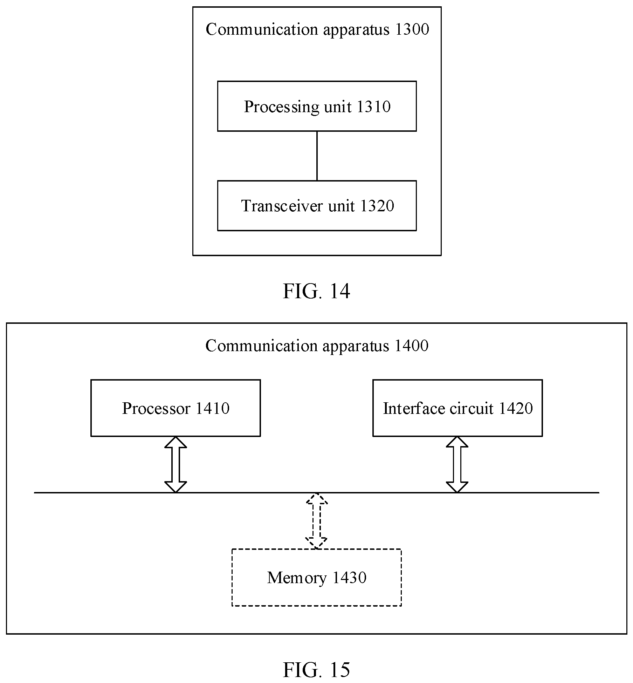

FIG. 14 and FIG. 15 are diagrams of possible structures of communication apparatuses according to embodiments of this application. These communication apparatuses may be configured to implement the functions of the terminal or the base station in the foregoing method embodiments, and therefore can also achieve beneficial effects of the foregoing method embodiments. In embodiments of this application, the communication apparatus may be a terminal apparatus or a network apparatus. The terminal apparatus may be a terminal or a module (for example, a chip) in the terminal. The network apparatus may be a network device or a module (for example, a chip) in the network device.

As shown in FIG. 14, a communication apparatus 1300 includes a processing unit 1310 and a transceiver unit 1320. The communication apparatus 1300 is configured to implement functions of the terminal apparatus or the network apparatus in the method embodiment shown in FIG. 3.

When the communication apparatus 1300 is configured to implement the functions of the terminal apparatus in the method embodiment shown in FIG. 3, the processing unit 1310 is configured to send first information and receive second information by using the transceiver unit 1320.

When the communication apparatus 1300 is configured to implement the functions of the terminal apparatus in the method embodiment shown in FIG. 3, in a possible implementation, the processing unit 1310 is further configured to send updated first information by using the transceiver unit 1320.

When the communication apparatus 1300 is configured to implement the functions of the terminal apparatus in the method embodiment shown in FIG. 3, in a possible implementation, the processing unit 1310 is further configured to: before sending the updated first information by using the transceiver unit 1320, determine that a change amount of a location of the terminal apparatus is greater than a first threshold, and/or that a change amount of a spatial region in which an obstacle exists around the terminal apparatus is greater than a second threshold.

When the communication apparatus 1300 is configured to implement the functions of the terminal apparatus in the method embodiment shown in FIG. 3, in a possible implementation, the processing unit 1310 is further configured to: if it is determined that at least one of the following information is met, determine that the change amount of the spatial region in which the obstacle exists around the terminal apparatus is greater than the second threshold: A variation of an elevation range corresponding to the spatial region in which the obstacle exists around the terminal apparatus is greater than a third threshold; or a variation of an azimuth range corresponding to the spatial region in which the obstacle exists around the terminal apparatus is greater than a fourth threshold.

When the communication apparatus 1300 is configured to implement the functions of the network apparatus in the method embodiment shown in FIG. 3, the processing unit 1310 is configured to receive first information and send second information by using the transceiver unit 1320.

When the communication apparatus 1300 is configured to implement the functions of the network apparatus in the method embodiment shown in FIG. 3, in a possible implementation, the processing unit 1310 is further configured to receive updated first information by using the transceiver unit 1320.

For more detailed descriptions of the processing unit 1310 and the transceiver unit 1320, refer to related descriptions in the method embodiment shown in FIG. 3.

As shown in FIG. 15, a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, or store input data required for running instructions by the processor 1410, or store data generated after the processor 1410 runs instructions.

When the communication apparatus 1400 is configured to implement the method shown in FIG. 3, the processor 1410 is configured to implement functions of the processing unit 1310, and the interface circuit 1420 is configured to implement functions of the transceiver unit 1320.

When the communication apparatus is a chip used in a terminal, the chip in the terminal implements the functions of the terminal apparatus in the foregoing method embodiments. That the chip in the terminal receives information from a base station may be understood to mean that the information is first received by another module (for example, a radio frequency module or an antenna) in the terminal, and then sent by these modules to the chip in the terminal. That the chip in the terminal sends information to a base station may be understood to mean that the information is first sent to another module (for example, a radio frequency module or an antenna) in the terminal, and then sent to the base station by these modules.

When the communication apparatus is a chip used in a base station, the chip in the base station implements the functions of the network apparatus in the foregoing method embodiments. That the chip in the base station receives information from a terminal may be understood to mean that the information is first received by another module (for example, a radio frequency module or an antenna) in the base station, and then sent by these modules to the chip in the base station. That the chip in the base station sends information to a terminal may be understood to mean that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. The storage medium may alternatively be a component of the processor. The processor and the storage medium may be located in an ASIC. In addition, the ASIC may be located in a base station or a terminal. The processor and the storage medium may exist in a base station or a terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium or may be transmitted from one computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects. "Including at least one of A, B, and C" may represent: including A; including B; including C; including A and B; including A and C; including B and C; and including A, B, and C.

It may be understood that various designations (for example, numerical designations "first" and "second", and alphabetic designations "implementation A" and "implementation B") in embodiments of this application are merely for ease of description and differentiation, and are not intended to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a terminal apparatus, and the method comprises:
sending first information, wherein the first information comprises indication information of at least one spatial region, the indication information of the at least one spatial region is used to determine a first spatial region, and the first spatial region comprises an orbital segment of a second satellite apparatus; and
receiving second information, wherein the second information indicates the terminal apparatus to switch from a first satellite apparatus to the second satellite apparatus.

2. A communication method, wherein the method is applicable to a network apparatus, and the method comprises:
receiving first information, wherein the first information comprises indication information of at least one spatial region, the indication information of the at least one spatial region is used to determine a first spatial region, and the first spatial region comprises an orbital segment of a second satellite apparatus; and
sending second information, wherein the second information indicates the terminal apparatus to switch from a first satellite apparatus to the second satellite apparatus.

3. The method according to claim 1 or 2, wherein indication information of a spatial region of the at least one spatial region comprises indication information of an elevation range; and
an elevation within the elevation range comprises an included angle between a line emitted from the terminal apparatus to the sky and a projection of the line on a horizontal plane.

4. The method according to any one of claims 1 to 3, wherein indication information of a spatial region of the at least one spatial region comprises indication information of an azimuth range; and
an azimuth within the azimuth range comprises an included angle between a projection, on the horizontal plane, of a line emitted from the terminal apparatus to the sky, and a projection, on the horizontal plane, of a preset line originating from the terminal apparatus.

5. The method according to any one of claims 1 to 4, wherein the at least one spatial region comprises the first spatial region and/or a second spatial region;
the first spatial region does not comprise an obstacle, or quality of a signal transmitted between the terminal apparatus and a satellite apparatus that moves to the first spatial region is greater than a first quality threshold; and
the second spatial region comprises an obstacle, or quality of a signal transmitted between the terminal apparatus and a satellite apparatus that moves to the second spatial region is less than a second quality threshold.

6. The method according to any one of claims 1 to 5, wherein the first information further comprises information about a priority associated with a spatial region of the at least one spatial region; and
the priority is associated with quality of a signal transmitted between a satellite apparatus running in the spatial region and the terminal apparatus, and/or the priority is associated with presence of an obstacle in the spatial region.

7. The method according to any one of claims 1 to 6, wherein the at least one spatial region is determined based on surrounding environment information of the terminal apparatus, and/or quality of a signal transmitted between the terminal apparatus and a satellite apparatus that moves to the at least one spatial region.

8. A communication method, wherein the method is applicable to a terminal apparatus, and the method comprises:
sending first information, wherein the first information comprises indication information of at least one orbital segment, the indication information of the at least one orbital segment is used to determine a first orbital segment, and the first orbital segment belongs to an orbit of a second satellite apparatus; and
receiving second information, wherein the second information indicates the terminal apparatus to switch from a first satellite apparatus to the second satellite apparatus.

9. A communication method, wherein the method is applicable to a network apparatus, and the method comprises:
receiving first information, wherein the first information comprises indication information of at least one orbital segment, the indication information of the at least one orbital segment is used to determine a first orbital segment, and the first orbital segment belongs to an orbit of a second satellite apparatus; and
sending second information, wherein the second information indicates the terminal apparatus to switch from a first satellite apparatus to the second satellite apparatus.

10. The method according to claim 8 or 9, wherein the indication information of the at least one orbital segment comprises indication information of the first orbital segment, and the indication information of the first orbital segment comprises indication information of a first angle range; and
an angle within the first angle range comprises an included angle between a line connecting a first point located on the orbit of the second satellite apparatus to a center of the orbit of the second satellite apparatus and a line connecting a reference point to the center of the orbit of the second satellite apparatus.

11. The method according to any one of claims 8 to 10, wherein the indication information of the at least one orbital segment comprises indication information of the second orbital segment, and the second orbital segment belongs to an orbit of the first satellite apparatus;
the indication information of the second orbital segment comprises indication information of a second angle range; and
an angle within the second angle range comprises an included angle between a line connecting a second point located on the orbit of the first satellite apparatus to a center of the orbit of the first satellite apparatus and a line connecting a reference point to the center of the orbit of the first satellite apparatus.

12. The method according to any one of claims 8 to 11, wherein the first information further comprises at least one of the following:
information about an orbital plane in which an orbital segment of the at least one orbital segment is located;
identification information of a satellite apparatus running on an orbital segment of the at least one orbital segment;
information about a time range for establishing a communication connection between a satellite apparatus running on an orbital segment of the at least one orbital segment and the terminal apparatus; or
a priority associated with an orbital segment of the at least one orbital segment, wherein the priority is associated with quality of a signal transmitted between a satellite apparatus running on the orbital segment and the terminal apparatus, and/or the priority is associated with presence of an obstacle in a signal transmission path between the satellite apparatus running on the orbital segment and the terminal apparatus.

13. A communication apparatus, wherein the apparatus comprises a processor and an interface circuit, wherein
the processor is configured to perform the following by using the interface circuit:
sending first information, wherein the first information comprises indication information of at least one spatial region, the indication information of the at least one spatial region is used to determine a first spatial region, and the first spatial region comprises an orbital segment of a second satellite apparatus; and
receiving second information, wherein the second information indicates the terminal apparatus to switch from a first satellite apparatus to the second satellite apparatus.

14. A communication apparatus, wherein the apparatus comprises a processor and an interface circuit, wherein
the processor is configured to perform the following by using the interface circuit:
receiving first information, wherein the first information comprises indication information of at least one spatial region, the indication information of the at least one spatial region is used to determine a first spatial region, and the first spatial region comprises an orbital segment of a second satellite apparatus; and
sending second information, wherein the second information indicates the terminal apparatus to switch from a first satellite apparatus to the second satellite apparatus.

15. The apparatus according to claim 13 or 14, wherein indication information of a spatial region of the at least one spatial region comprises indication information of an elevation range; and
an elevation within the elevation range comprises an included angle between a line emitted from the terminal apparatus to the sky and a projection of the line on a horizontal plane.

16. The apparatus according to any one of claims 13 to 15, wherein indication information of a spatial region of the at least one spatial region comprises indication information of an azimuth range; and
an azimuth within the azimuth range comprises an included angle between a projection, on the horizontal plane, of a line emitted from the terminal apparatus to the sky, and a projection, on the horizontal plane, of a preset line originating from the terminal apparatus.

17. The apparatus according to any one of claims 13 to 16, wherein the at least one spatial region comprises the first spatial region and/or a second spatial region;
the first spatial region does not comprise an obstacle, or quality of a signal transmitted between the terminal apparatus and a satellite apparatus that moves to the first spatial region is greater than a first quality threshold; and
the second spatial region comprises an obstacle, or quality of a signal transmitted between the terminal apparatus and a satellite apparatus that moves to the second spatial region is less than a second quality threshold.

18. The apparatus according to any one of claims 13 to 17, wherein the first information further comprises information about a priority associated with a spatial region of the at least one spatial region; and
the priority is associated with quality of a signal transmitted between a satellite apparatus running in the spatial region and the terminal apparatus, and/or the priority is associated with presence of an obstacle in the spatial region.

19. The apparatus according to any one of claims 13 to 18, wherein the at least one spatial region is determined based on surrounding environment information of the terminal apparatus, and/or quality of a signal transmitted between the terminal apparatus and a satellite apparatus that moves to the at least one spatial region.

20. A communication apparatus, wherein the apparatus is applicable to a terminal apparatus, and the apparatus comprises a processor and an interface circuit, wherein
the processor is configured to perform the following by using the interface circuit:
sending first information, wherein the first information comprises indication information of at least one orbital segment, the indication information of the at least one orbital segment is used to determine a first orbital segment, and the first orbital segment belongs to an orbit of a second satellite apparatus; and
receiving second information, wherein the second information indicates the terminal apparatus to switch from a first satellite apparatus to the second satellite apparatus.

21. A communication apparatus, wherein the apparatus is applicable to a network apparatus, and the apparatus comprises a processor and an interface circuit, wherein
the processor is configured to perform the following by using the interface circuit:
receiving first information, wherein the first information comprises indication information of at least one orbital segment, the indication information of the at least one orbital segment is used to determine a first orbital segment, and the first orbital segment belongs to an orbit of a second satellite apparatus; and
sending second information, wherein the second information indicates the terminal apparatus to switch from a first satellite apparatus to the second satellite apparatus.

22. The apparatus according to claim 20 or 21, wherein the indication information of the at least one orbital segment comprises indication information of the first orbital segment, and the indication information of the first orbital segment comprises indication information of a first angle range; and
an angle within the first angle range comprises an included angle between a line connecting a first point located on the orbit of the second satellite apparatus to a center of the orbit of the second satellite apparatus and a line connecting a reference point to the center of the orbit of the second satellite apparatus.

23. The apparatus according to any one of claims 20 to 22, wherein the indication information of the at least one orbital segment comprises indication information of the second orbital segment, and the second orbital segment belongs to an orbit of the first satellite apparatus;
the indication information of the second orbital segment comprises indication information of a second angle range; and
an angle within the second angle range comprises an included angle between a line connecting a second point located on the orbit of the first satellite apparatus to a center of the orbit of the first satellite apparatus and a line connecting a reference point to the center of the orbit of the first satellite apparatus.

24. The apparatus according to any one of claims 20 to 23, wherein the first information further comprises at least one of the following:
information about an orbital plane in which an orbital segment of the at least one orbital segment is located;
identification information of a satellite apparatus running on an orbital segment of the at least one orbital segment;
information about a time range for establishing a communication connection between a satellite apparatus running on an orbital segment of the at least one orbital segment and the terminal apparatus; or
a priority associated with an orbital segment of the at least one orbital segment, wherein the priority is associated with quality of a signal transmitted between a satellite apparatus running on the orbital segment and the terminal apparatus, and/or the priority is associated with presence of an obstacle in a signal transmission path between the satellite apparatus running on the orbital segment and the terminal apparatus.

25. A communication apparatus, comprising modules configured to perform the method according to any one of claims 1 to 12.

26. A communication apparatus, comprising a processor, wherein the processor is configured to implement the method according to any one of claims 1 to 12 by using a logic circuit or executing code instructions.

27. A computer-readable storage medium, wherein the storage medium stores a computer program or instructions, and when the computer program or the instructions are executed by a communication apparatus, the method according to any one of claims 1 to 12 is implemented.

28. A computer program product, wherein the computer program product stores a computer program, the computer program comprises program instructions, and when the program instructions are executed by a computer, the computer is enabled to perform the method according to any one of claims 1 to 12.
